(19) Europäisches Patentamt / European Patent Office / Office européen des brevets

(11) **EP 1 965 550 A2**

(12) **EUROPEAN PATENT APPLICATION**

(43) Date of publication:
**03.09.2008 Bulletin 2008/36**

(51) Int Cl.:
*H04L 27/26* *(2006.01)*

(21) Application number: **07117304.1**

(22) Date of filing: **26.09.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **02.03.2007 US 892704 P**
**04.05.2007 US 744290**

(71) Applicant: **Fujitsu Ltd.**
**Kawasaki-shi, Kanagawa 211-8588 (JP)**

(72) Inventor: **Huo, Changqin**
**c/o FUJITSU LIMITED,**
**Kawasaki-shi, Kanagawa 211-8588 (JP)**

(74) Representative: **Wilding, Frances Ward**
**Haseltine Lake**
**Lincoln House**
**300 High Holborn**
**London WC1V 7JH (GB)**

(54) **Amble modulation series**

(57)    An amble modulation series in a downlink relay zone in an IEEE 802.16 network, the amble modulation series being a reverse version of a preamble modulation series of the network. For example, the amble modulation series is related to a preamble modulation series $PN_i$, $i = 0,1,...,113$ of the IEEE 802.16 network as follows:

$$PN_i^A(j) = PN_i(J - j), i = 0, 1, ..., 113, j = 0, 1, ..., J$$

where J is dependent on a Fast Fourier Transform (FFT) size of the network, and is equal to 587, 283 and 142 for an FFT size of 2048, 1024 and 512, respectively.

PROVIDING AN AMBLE MODULATION SERIES $PN_i^A$ IN AN IEEE 802.16 NETWORK, THE AMBLE MODULATION SERIES BEING RELATED TO A PREAMBLE MODULATION SERIES $PN_i$, $i = 0,1,...,113$ OF THE IEEE 802.16 NETWORK AS FOLLOWS:

$$PN_i^A(j) = PN_i(J-j), i = 0,1,...,113, j = 0,1,...,J$$

WHERE J IS DEPENDENT ON A FAST FOURIER TRANSFORM (FFT) SIZE OF THE NETWORK, AND IS EQUAL TO 567, 283 AND 142 FOR AN FFT SIZE OF 2048, 1024 AND 512, RESPECTIVELY

USING THE AMBLE MODULATION SERIES IN A DOWNLINK RELAY ZONE OF THE NETWORK

FIG. 3

**Description**

CROSS-REFERENCE TO RELATED APPLICATIONS

This application is based on, and claims the benefit of, US Provisional Application No.601892,704, filed March 2, 2007, inventor Changqin HUO, attorney docket number 1974.1021 p, and which is incorporated herein by reference in its entirety.

BACKGROUND OF THE INVENTION

There are many different types of wireless networks in which a base station (BS) communicates with a subscriber station (SS). A subscriber station (SS) might be, for example, a mobile station (MS).

An Institute of Electrical and Electronics Engineers (IEEE) 802.16 network is one type of wireless network in which a base station (BS) communicates with a subscriber station (SS). IEEE 802.16j is a new addition to the IEEE 802.16 suite of standards, and is currently being defined. IEEE 802.16j governs the behavior of a relay station (RS) operating within an IEEE 802.16e mobile network. An IEEE 802.16e mobile network is often referred to as a "WiMAX" mobile network. An IEEE 802.16j network is often referred to as a Mobile Relay System (MRS).

In an IEEE 802.16j network, a base station that can support at least one relay station is referred to as a mobile relay base station (MR-BS). The purpose of using relay stations in the network is to extend radio coverage or to increase the throughput of a mobile relay base station (MR-BS). A relay station (RS) would typically be a low-cost alternative to a mobile relay base station (MR-BS).

A relay station (RS) transfers data of active service flows between a mobile relay base station (MR-BS) and subscriber stations (SS), in both an uplink direction and a downlink direction. The uplink direction refers to transmissions from the subscriber station (SS) to the relay station (RS), and from the relay station (RS) to the mobile relay base station (MR-BS). The downlink direction refers to transmissions from the mobile relay base station (MR-BS) to a relay station (RS), and from a relay station (RS) to a subscriber station (SS).

Relay stations (RS) may be linked together into a chain, forming a so-called multi-hop relay station connection, or a multi-hop relay station branch, in which one relay station (RS) passes data to and from another relay station (RS).

In a MRS, a downlink transmission is composed of an access zone and one or more relay zones. The access zone is used by a subscriber station (SS) to access the network. In the access zone, a mobile relay base station (MR-BS) or relay station (RS) transmits data to a subscriber station (SS) directly. The relay zones are used by a mobile relay base station (MR-BS) or relay station (RS) to transmit to a subscriber stations (SS) through child relay stations (RSs).

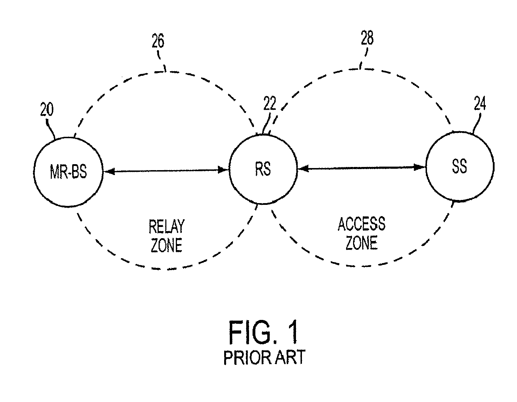

For example, FIG. 1 is a diagram illustrating a network which includes a mobile relay base station (MR-BS) 20, a relay station (RS) 22 and a subscriber station (SS) 24. Subscriber station (SS) 24 might be, for example, a mobile station.

Referring now to FIG. 1, mobile relay base station (MR-BS) 20 communicates with relay station (RS) 22 in relay zone 26. Relay station (RS) 22 communicates directly with subscriber station (SS) 24 in access zone 28.

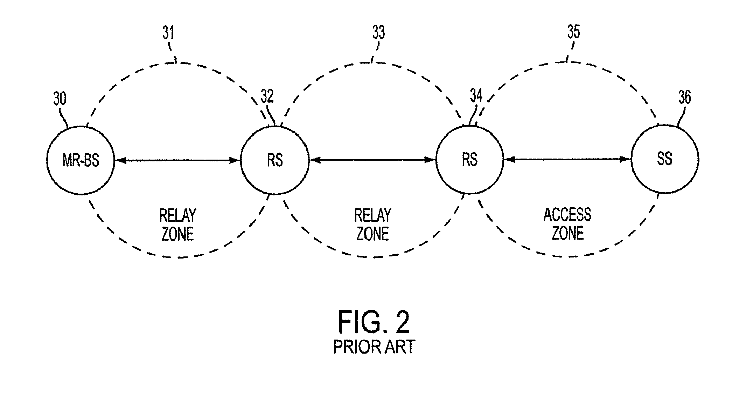

FIG. 2 is a diagram illustrating a network which includes a multi-hop relay station connection. Referring now to FIG. 2, mobile relay base station (MR-BS) 30 communicates with relay station (RS) 32 in relay zone 31. Relay station (RS) 32 communicates with relay station (RS) 34 in relay zone 33. Relay station (RS) 34 communicates directly with subscriber station (SS) 36 in access zone 35.

With the introduction of relay stations into the network, there is a need to reconsider various aspects of network design and implementation.

SUMMARY OF THE INVENTION

Various embodiments of the present invention are directed to an amble modulation series in a downlink relay zone in an IEEE 802.16 network, the amble modulation series being a reverse version of a preamble modulation series of the network.

For example, various embodiments of the present invention are directed to an amble modulation series $PN_i^A$ for a downlink relay zone in an IEEE 802.16 network, the amble modulation series being related to a preamble modulation series $PN_1, i = 0,1,...,113$ of the IEEE 802.16 network as follows:

$$PN_i^A(j) = PN_i(J - j), \quad i = 0,1,...,113, j = 0,1,...,J$$

where J is dependent on a Fast Fourier Transform (FFT) size of the network, and is equal to 567, 283 and 142 for an FFT size of 2048, 1024 and 512, respectively.

In various embodiments of the present invention, the amble modulation series is easily understood when shown in table form.

The above-described embodiments of the present invention are intended as examples, and all embodiments of the present invention are not limited to including features described in the above examples.

BRIEF DESCRIPTION OF THE DRAWINGS

FIG. 1 is a diagram illustrating a network which includes a mobile relay base station, a relay station and a subscriber station.

FIG. 2 is a diagram illustrating a network which includes a multi-hop relay station connection.

FIG. 3 is a diagram illustrating the use of an amble modulation series, according to an embodiment of the present invention.

FIGS. 4 and 5 are diagrams illustrating the performance of an associated amble modulation series, according to an embodiment of the present invention.

FIG. 6 is a diagram illustrating a network using an amble modulation series, according to an embodiment of the present invention.

FIG. 7 is a diagram illustrating a network using an amble modulation series, according to an additional embodiment of the present invention.

DESCRIPTION OF THE PREFERRED EMBODIMENTS

Reference will now be made in detail to embodiments of the present invention, examples of which are illustrated in the accompanying drawings, wherein like reference numerals refer to like elements throughout.

Much of the terminology used herein, including abbreviations, is defined in IEEE 802.16-2004, IEEE 802.16e-2005, IEEE 802.16-2005, and IEEE 802.16j-06/026r2, which are incorporated herein by reference in their entireties.

In IEEE 802.16e networks, the first symbol of a downlink transmission is referred to as the preamble. The preamble is used by a subscriber station (SS) to perform measurements and procedures such as time synchronization, carrier frequency estimation, channel response estimation, cell and sector identification, etc. Performing such measurements and procedures in accordance with the preamble is well-known.

According to embodiments of the present invention, a similar amble can be introduced into relay zones to achieve the similar objectives as the preambles.

A set of 114 preamble modulation series are specified in IEEE 802.16e, which is incorporated by reference herein in its entirety. This defined set of preamble modulation series was originally intended to be used in an access zone. More specifically, this defined set of preamble modulation series was originally intended to be used between a base station (BS) and a subscriber station (SS) in networks that do not use relay stations. In such networks, without the use of relay stations, the subscriber station (SS) must be in communication range of the base station (BS).

One option for a relay zone amble modulation series is to use the same preamble modulation series defined in 802.16e, i.e., the one used in the access zone in mobile relay networks. However, as the same preamble modulation series would be used in both the access zone and the relay zone, this option could cause problems since subscriber stations (SS) could detect the same preamble twice in one frame.

According to embodiments of the present invention, a new set of amble modulation series $PN_i^A$, $i = 0, 1, ..., 113$, is to be used in the downlink (DL) relay zone of an IEEE 802.16 network. The new amble modulation series is related to the original preamble modulation series $PN_i^A$, $i = 0, 1, ..., 113$ specified in 8.4.6.1.1 in IEEE 802.16-2005, which is incorporated herein by reference in its entirety, as indicated by the following equation:

$$PN_i^A(j) = PN_i(J - j), \quad i = 0, 1, ..., 113, \ j = 0, 1, ..., J \quad (1)$$

where J is dependent on the Fast Fourier Transform (FFT) size used in the system.

The FFT size of the network would be readily known. More specifically, an IEEE 802.16 network has an associated FFT size on which the network is designed. IEEE 802.16 currently specifies the use of networks with an FFT size of, for example, 2048, 1024 or 512. However, the present invention is not limited the networks having an FFT size of 2048, 1024 or 512. Instead, a network could have a different FFT size. The above equation would still apply to networks having different FFT sizes. However, the value of J would be different for different FFT sizes.

J = (number of characters defined in the system) x (number of bits per character) - n, where n = 1 for FFT size of 2048 and 1024, and n = 2 for FFT size of 512.

For example, in an 802.16e network with an FFT size of 1024, there are 71 characters, with four bits per character. In this example, J = (71) x (4) - 1 = 283.

Moreover, J is equal to 567, 283 and 142 for an 802.16 network with FFT size of 2048, 1024 and 512, respectively.

The new amble set $PN_i^A$ is the reverse version of the original preamble set can be referred to as an "associated amble modulation series".

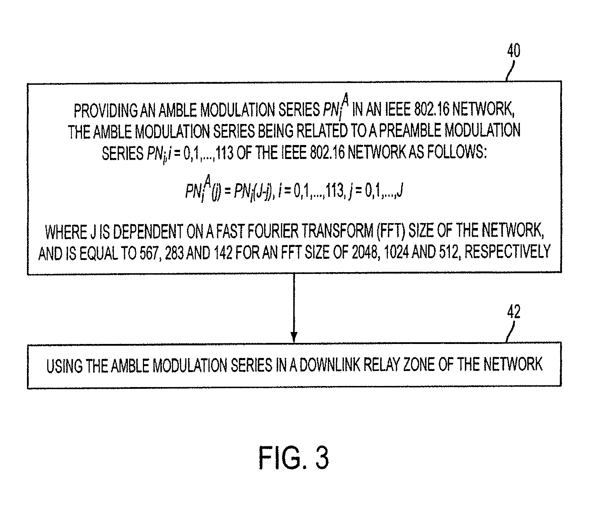

Therefore, FIG. 3 is a diagram illustrating the use of an amble modulation series according to an embodiment of the present invention. Referring now to FIG. 3, in operation 40, an amble modulation series $PN_i^A$ is provided in an IEEE 802.16 network, the amble modulation series being related to a preamble modulation series $PN_i$, i = 0,1,...,113 of the IEEE 802.16 network according to the following equation:

$$ PN_i^A(j) = PN_i(J - j), i = 0,1,...,113, j = 0,1,...,J $$

where J is dependent on the FFT size of the network, and is equal, for example, to 567, 283 and 142 for an FFT size of 2048, 1024 and 512, respectively.

In operation 42, the amble modulation series is used in a downlink relay zone of the network. For example, a mobile relay base station (MR-BS) can insert the amble modulation series into a frame which is transmitted by the mobile relay base station (MR-BS) in a downlink relay zone. Similarly, a relay station (RS) can insert the amble modulation series into a frame which is transmitted by the relay station (RS) in a downlink relay zone. The amble modulation series can then be used by a subordinate relay station (RS) to perform measurements and procedures such as, for example, time synchronization, carrier frequency estimation, channel response estimation, cell and sector identification, etc.

Of course, the present invention is not limited to any specific measurements or procedures being performed. Performing such measurements and procedures in accordance with the amble modulation series is similar to performing such measurements with the preamble, and would be well-understood by a person of ordinary skill in the art in view of the disclosure herein.

Based on the above equation, for the original preamble modulation series $PN_i$, i = 0,1,...,113 specified in 8.4.6.1.1 in IEEE 802.16-2005, the amble modulation series $PN_i^A$ would be as indicated in Tables 1, 2 and 3 disclosed herein for an FFT size of 2048, 1024 and 512, respectively. These tables could easily be generated from the above equation.

Moreover, for a different preamble modulation series, the equation would generate a different amble modulation series for each FFT size. Accordingly, the present invention is not limited to the specific amble modulation series shown in Tables 1, 2 and/or 3.

To use the amble modulation series, a mobile relay base station (MR-BS) or a relay station (RS) could be provided with the specific amble modulation series. For example, the mobile relay base station (MR-BS) or a relay station (RS) could be provided with a table, such as Tables 1, 2 or 3, or with information corresponding to that in Tables 1, 2 or 3. Or, the mobile relay base station (MR-BS) or a relay station (RS) might be provided with only specific ones of the amble modulation series that are required by the respective mobile relay base station (MR-BS) or the respective relay station (RS). Such tables or specific values might reside on the mobile relay base station (MR-BS) or the respective relay station (RS), or might reside elsewhere in the network and be provided to, or obtained by, the respective mobile relay base station (MR-BS) or respective relay station (RS) when needed. In an additional embodiment, a mobile relay base station (MR-BS) or relay station (RS) might generate the amble modulation series from the above equation, or be provided with the amble modulation from a different device on the network which generates the amble modulation series from the above equation, and provides the generated amble modulation series to a mobile relay base station (MR-BS) or relay station (RS) when needed.

Accordingly, embodiments of the present invention are not limited to any particular manner of generating or providing the amble modulation series to a mobile relay base station (MR-BS) or relay station (RS).

This new amble modulation series has several important properties. For example, there is one and only one associated amble for each preamble defined in IEEE 802.16-2005; hence no extra efforts are required for the new amble planning in the network deployment.

Moreover, the associated amble modulation series has the same auto-correlation and cross-correlation performance as the original preamble modulation series. This property make the associated amble set work as well as the original preamble set does.

In addition, the associated amble set has peak-to-average-power-ratio (PAPR) performance better than (or the same as) the corresponding preamble set.

Further, the cross-correlation between the associated amble modulation series and the original preamble modulation series is low enough for the purpose of the amble in relay zones.

Moreover, the associated amble series has a simple relationship with the corresponding preamble series and is easy to be implemented.

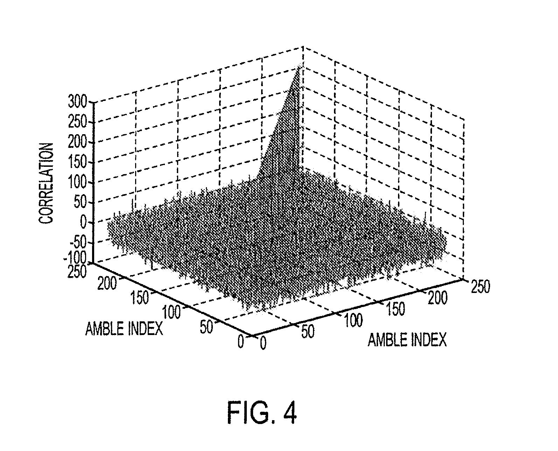

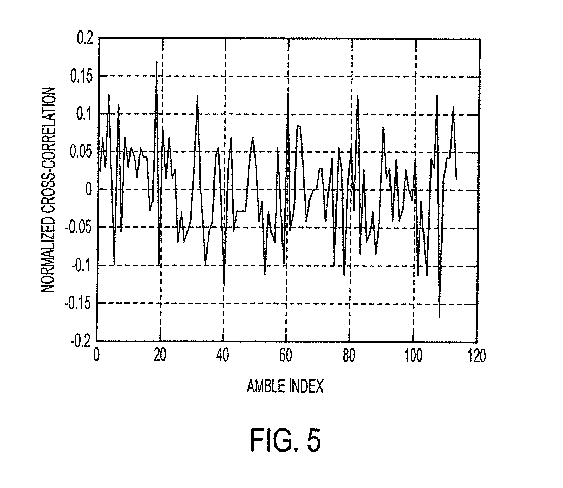

The performance of the associated amble modulation series is illustrated in FIGS. 4 and 5.

More specifically, the auto-correlation and the cross-correlation of the aggregate amble set, i.e. the preamble set (numbered from 0 to 113) and the associated amble set (numbered from 114 to 283), is illustrated in FIG. 4 for FFT size of 1024.

The normalized (by the auto-correlation, i.e. 284 for a FFT size of 1024) cross-correlation between the associated amble series and the corresponding original preamble series is illustrated in FIG. 5 for amble indexes from 0 to 113. The performance of the new amble set appears to be good enough for the purpose of the amble in the downlink (DL) relay zone.

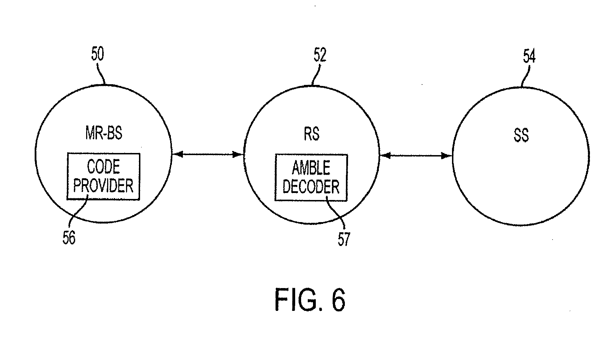

FIG. 6 is a diagram illustrating a network using an amble modulation series, according to an embodiment of the present invention. Referring now to FIG. 6, the network includes a mobile relay base station (MR-BS) 50, a relay station (RS) 52 and a subscriber station (SS) 54. Subscriber station (SS) 54 might be, for example, a mobile station. The network in FIG. 6 is an example of a two-hop architecture, since there is only one relay station (RS) 52 between mobile relay base station (MR-BS) 50 and subscriber station (SS) 54. Of course, the present invention in not limited to a two-hop architecture, or to the specific architecture shown in FIG. 6.

Mobile relay base station (MR-BS) 50 includes a code provider 56 providing the amble modulation series. Code provider 56 might include memory storing the required amble modulation series. Alternatively, code provider 56 might be a processor which generates the amble modulation series based on the above-described equation. FIG. 6 shows code provider 56 as being included on mobile relay base station (MR-BS) 50. However, the present invention is not limited to code provider 56 being at any particular location. For example, code provider 56 could be provided on a different entity in the network, with the required amble modulation series being provided to mobile relay base station (MR-BS) 50 as needed.

Mobile relay base station (MR-BS) 50 inserts the amble modulation series into a downlink frame, and transmits the frame to relay station (RS) 52. Relay station (RS) 52 includes an amble decoder 57 which decodes the amble modulation series inserted into the downlink frame. Relay station (RS) 52 then performs measurements and tests in accordance with the decoded amble modulation series.

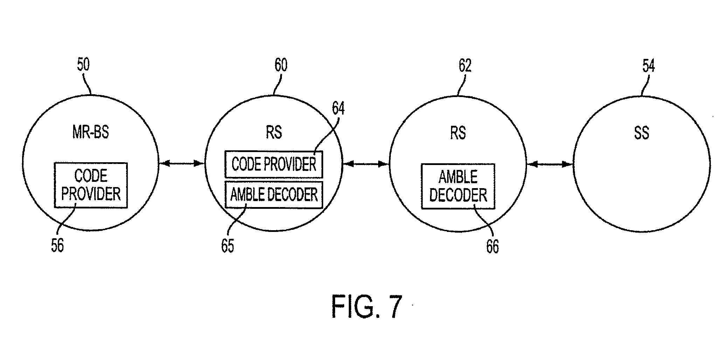

FIG. 7 is a diagram illustrating a network using an amble modulation series, according to an additional embodiment of the present invention. Referring now to FIG. 7, the network includes mobile relay base station (MR-BS) 50, relay stations (RS) 60 and 62, and subscriber station (SS) 54. The network in FIG. 7 is an example of a multi-hop architecture, since there are two relay stations (RS) 60 and 62 between mobile relay base station (MR-BS) 50 and subscriber station (SS) 54. In other embodiments, there could be additional relay stations, providing additional hops, between mobile relay base station (MR-BS) 50 and subscriber station (SS) 54. Of course, the present invention in not limited to a multi-hop architecture, or to the specific architecture shown in FIG. 7.

In the embodiment of FIG. 7, mobile relay base station (MR-BS) 50 includes code provider 56 providing the amble modulation series. In addition, relay station 60 also includes a code provider 64 and amble decoder 65. Relay station 62 includes an amble decoder 66.

FIG. 7 shows code providers 64 and 66 being included on relay stations (RS) 60 and 66, respectively. However, the present invention is not limited to code providers 64 and 66 being at any particular location. For example, code providers 64 and 66 could be provided on a different entity in the network, with the required amble modulation series being provided to relay stations as needed.

Mobile relay base station (MR-BS) 50 inserts the amble modulation series into a downlink frame, and transmits the frame to relay station (RS) 60. Amble decoder 65 of relay station (RS) 60 decodes the amble modulation series inserted into the downlink frame. Relay station (RS) 60 then performs measurements and tests in accordance with the decoded amble modulation series.

Relay station (RS) 60 also inserts an amble modulation series into its downlink frame, and transmits the new frame to relay station 62. Amble decoder 66 of relay station 62 decodes the amble series and performs measurements and tests in accordance with the decoded amble modulation series.

FIGS. 6 and 7 show a respective code provider for each mobile relay base station (MR-BS) that requires the amble modulation series. However, in some embodiments, there might be a single code provider that provides the amble modulation series to more than one mobile relay base station (MR-BS). Therefore, the present invention is not limited to any particular number or location of code providers.

The network in FIG. 7 shows only two relay stations between mobile relay base station (MR-BS) 50 and subscriber station (SS) 54. However, in various embodiments of the present invention, there might be additional relay stations (indicating additional hops) between mobile relay base station (MR-BS) 50 and subscriber station (SS) 54. In such embodiments, depending on the configuration, the additional relay stations may need the amble modulation series to transmit a frame in a downlink relay zone.

Various embodiments of the present invention are applicable to IEEE 802.16 networks, which includes amendments and extensions to IEEE 802.16. Such amendments and extensions include, but are not limited to, IEEE 802.16e and 802.16j. Moreover, the present invention is not limited to IEEE 802.16 networks, and can be applied to other types of networks.

Various embodiments of the present invention relate to networks having subscriber stations. A subscriber station might be, for example, a fixed station or mobile station. However, there are many different types of subscriber stations, and the present invention is not limited to any particular type of subscriber station.

Various network configurations are shown herein with specific numbers of mobile relay base stations (MR-BS) and relay stations (RS). However, the present invention is not limited to configurations having any specific number or configurations of mobile relay base stations (MR-BS), or any specific number or configurations of relay stations (RS).

Networks are described herein has having a FFT size. However, the present invention is not limited to networks having any specific FFT size, and embodiments of the present invention are applicable to networks having an FFT size different than in the examples described herein.

The following are the preamble modulation series $PN_i$, $i = 0,1, ..., 113$ specified in Tables 309, 309a and 309b of 8.4.6.1.1 in IEEE 802.16-2005, which are incorporated herein by reference.

**Table 309-Preamble modulation series per segment and IDcell for the 2k (2048) FFT mode**

| Index | IDcell | Segment | Series to modulate ($W_k$) |
|---|---|---|---|
| 0 | 0 | 0 | 0xC12B7F736CFFB14B6ABF4EB50A60B7A3B4163EA3360F697 C45075997ACE17BB1512C7C0CEBB34B389D8784553C0FC60B DE4F166CF7B04856442D97539FB915D80820CEDD858483 |
| 1 | 1 | 0 | 0xA9F7AC1BD0A4BD694D3EDC2991CC3B2D24BF26A22346F 8DB370202CDA25D382D4119AAC676E320A938A95762C40786 89B6024E477F0EDA8F563106F0D70EBE3E006F75B50B537D |
| 2 | 2 | 0 | 0x56531FBB87033E4F362273BAF0F8879B45B9F19143E5494F7 B025D138DF057756DE625196292AF6D28FD0AA08453E5B9871 EDAE3E680B848C67BFBD7ADE73CFBBBA4E81191267A |
| 3 | 3 | 0 | 0xB397F552DEB2717CC19DDFOD59674DD6F6D3866A3FD023 A009F592B56460660F ID585E3078AFE272D97FDF4280790C3A 9E5FCF9910895E9DAF2BF65728F7390C930428B4E6793C |
| 4 | 4 | 0 | 0x1BD4C84B42DF6B7DC53F6C7B8E223A3B16D8E214CFA346 9A8D22246BCF297E5F92J59406608B8AOBB55EF64A85B124IC SCDFA048CF0492AB3BCF46A8E8FE986F06E246F1E06C68 |
| 5 | 5 | 0 | 0x4E00947B6722B09389EFB4F6951C488B368393E82549483592 87441709C6F0E4463C067733C42A7FA8964SD7D69AF2ACE540 2AC473DBF2C75ECB8B630BAF4B27F282249BD52660 |
| 6 | 6 | 0 | 0x494CAB6935E10DB5D6E985997849EA45F0D5E2EDF7670BF D9643531760D9F7CC01DD63BEEDFECB7E806F3F189291C074 C8289D93A95324DI3139IE23EB9CFEABOE789DAIF5B9CB |
| 7 | 7 | 0 | 0x4C5F10264D6C5085346E86BF8567294523C1B683D2A220D9 BEDCEBBA110620BB53ECB0338BE7109240E22EC902FCA05F 97338BB9DF2DDEAF7C795BCB160BD4F01A6DBF2A729373 |
| 8 | 8 | 0 | 0x79797D9AB260C20D5A460CDC49B2D0285E095E835EAF2E CC74E010DD8A53797CE0EC2EEBA51E779AA6B749B8E69FF DD632AC79D64143467E73017113BCDF45E787D0A9EAC3D22 E |

(continued)

| Index | IDcell | Segment | Series to modulate ($W_k$) |
|-------|--------|---------|---------------------------|
| 9 | 9 | 0 | 0xA1B9AC2C3D5B9BAAE5067C9E4A83C167076BE7D8699AC<br>A710FF205DE774FD46DD5F7851A2149D61E57152B98B6AF41<br>94B6FED90ADA008DID5F8DD87E8060F943BC9124C1999236 |
| 10 | 10 | 0 | 0x066E5FA91D00D63B26036009F8C69142B9D936396FF9E1378<br>6478BBFF5DE6F184A0F844663950F69AFEDEA93CA4A3BF94<br>B13175A2CBBA3836A34E5CE6D763767B35515F332DS36 |
| 11 | 11 | 0 | 0xF443E9FBF763DA2A5137A57C7DA504D194EC1797AD33365<br>BAC2F0C94541F4D47A664A7A17308C37E06BB0826FF999C15<br>EE430A3CC54159E3B7EEBD5FF307BB24A939AB261E2B3C |
| 12 | 12 | 0 | 0xF38BE6D2108483C056088C5E7C8BF92E9C973E0B2ADA934<br>2B46C06C4C2516CF7B9E6043E2947AD40F41734E02A9ADCE9<br>C70E03C4D50E7EAC73DAD56BDBB796289DDCC357776DE2 |
| 13 | 13 | 0 | 0x104AA84E70B163A42654A45995182B1C3DD63F4BCB09ECA<br>79A0D6D2D2A784DD6015794598310BE087F75019227F899744<br>B7C73A9008C83C0923D5DC 154FB2DCBF8983E709BCDF3 |
| 14 | 14 | 0 | 0x0B49A507AC4EAAC7551FC4B00658A28D951FC81723CC1C0<br>24AAC6A9DE9686383C28036C762C020012D797866DE589B36<br>BB95DFDAC2B3DOAB9DDEOB9719918062FE824E063BA3EC |
| 15 | 15 | 0 | 0x64C14C7D3725A74923E6B2FB1C3BDC77FEE58CB0AF310E<br>C37F22C93E2CS09AE8410963E6CF5E7E192502960F0272244A3<br>1D2CDDC657BCFF422E29CSODSE82EDCB44579181 BBA4D |
| 16 | 16 | 0 | 0x210D8A8E602BD53F981BE763E10F4730BDA53D2F89BD1D9<br>1C8F2DD5B96732935F789F643911937344E9F2ECF3222AB076<br>BC2B5EE407DC581FOEF9FFBD56D14D137A0418ADA06D0 |
| 17 | 17 | 0 | 0x88960A88E3F79C95D525DB49679C20A736D0E9E4D1FCB9D<br>E7735AE1E947F4E93637E98143D6BB779394C58F2AC5A9BD7<br>B2074E98F1B2026B67B507CAAD8076082B09FB345DA02D |
| 18 | 18 | 0 | 0x1D2D5C5CDEAFCA5EC180D9638CD0F277AF08AB5133E6D<br>60C919AADAD00569E5F902D40500542631FB729FC3AF456C9<br>A47E3EB967D51E09D712D8D49A028E738BEC90061B089C9F |
| 19 | 19 | 0 | 0xA063E03DE6C137F3FC56F970052BCF7333C8451BF5D18D1<br>B9AA5342E79C25451C1D862ECB5CFF21B7CC203817D78C192<br>EE1A68976652E1740C4B123552C85CEE524A2AA90D428B |
| 20 | 20 | 0 | 0xD2A7F126A9599093A9262E66A2471B6B6A2ACB0A4330A11<br>4011366CBC3BOICCSSCF1915982BE64DDDF8EEA0985D8F47<br>BC4B41381CS8271 C30578960EEFB054F299C721B81D5DFE |
| 21 | 21 | 0 | 0x7682842351C76BG8E4A7EA4EDDBOF92F6E876FCFDFDAA4<br>987B38FC4FA47C52EF0070DCC8C77FA622B20BEBC23730116<br>60B4960EF49FB5E519D79E12029C7D13C553EDC48564A52 |
| 22 | 22 | 0 | 0xAD6143FS7SC4C965A7018B8230D8D50297DA2C54A6DDS2B<br>A6207620F4A66EAFEBC4DD56233FFSDF78FB20CD74ECC6DO<br>1232FCFB9CBD36B3381F0224EF5DE7BEOAFEF0A1AEF3D82 |
| 23 | 23 | 0 | 0x9A14B722E05D845SA80B4A1B1D12A30C1E25D9488BAD48<br>6C639CC7BDF6SlE957E041A 7C092A916BF3E3642121350579B<br>3F8F8F4A30570237E722A6DC532A26F4FD4A0767D91A8B |
| 24 | 24 | 0 | 0xE6944DEEE85D75E3C5D9B90912177D8A85909D87AC21FA4<br>A51660E11D30DBEBD391E5972D000EF4E9BF30B63B18C0285<br>FE4151A4231C289A824D405142B7C775C3C68D8AA1D8A7 |

(continued)

| Index | IDcell | Segment | Series to modulate ($W_k$) |
|---|---|---|---|
| 25 | 25 | 0 | 0x9927326FDFEC99025AA1B79364F06C63AFE4A96C2A20FF8 B151EF97AFD08E161EA6B10A1FA74794521DE02645C2561D3 BEA5D382AE3707112619403E23C724B36B791DFAFEAA3A |
| 26 | 26 | 0 | 0x03C19F38117AE5BDADF256FB4A223A660E2D626598F56580 E30FA2E40A521FE5D68709B7F62E4C08CB9A26AE12002AD2F A9DE6C2B298538556EFBA71626A02745C3DB5EBADD3F3 |
| 27 | 27 | 0 | 0xCBA035B40EB7C8A3A048C490E38935CBF956C58AFC891A 6C112C0321CF5262498915794DCA703BD31A96FF4C0636F2D5 E9F17C23F1486B90715597D565017CB8E424DE9A8E464E |
| 28 | 28 | 0 | 0x9321B7BE085143649644BCDF8342FCAD3462DA1C572227B0 39BBC6F58B52EEED2ACFB38F9CAA2BA2F513A87B 10DD19D EFB6A9972EE12D81C83DBFB3CFCC93D35ED252DOE1A3D1E |
| 29 | 29 | 0 | 0x215F6EA7C7F95C74828485AABF6A5F54FD32D1A8F4F6F1C 20E6CDB57FA81ED70DFE44ACCD4B37D4F01AD3BF31 AFBB 38A4DDBC613C8809E46C1247222E5041D8CDC08F37F679878 |
| 30 | 30 | 0 | 0xB5ABE9FC329600031F97DEA8CF5B17EC432B89F19082A3C FA2682AAF121EE855873119A78869AF988BD90C64A7F312247 27D22F74D7499AF6CD3B649C54AED6DC84DD8AB876B84 |
| 31 | 31 | 0 | 0x956D097E914338D226020B8A3BA5B3BB8733A9723CF19485 DD9D22670B1328B825A6BA154586EDE60EB328AF8DFH4182 EDAEE401620A1E870BFFFF430922893C1F54A87A90BD3 |
| 32 | 0 | 1 | 0x251D994101EDA04D8BD0B8EA6FA20AE590C2CC199AB083 C6AE61F091F2DD41D989EC164B1481D611BE9CEA0094AFE9 DB56A4763F55B26E54EAB73ACD7D4BBA64C1421BC3EB9D6 7 |
| 33 | 1 | 1 | 0x113A5FB9C529AADC9CAB1FB882905601778659CDB69AFC BADDF8B42314A7985B5F87C20692309D350454FF9326481683 FADAE471 1DDOCC5DACEDF7CD5DF1177D60EBA4DBE657F1 |
| 34 | 2 | 1 | 0x9F08189EFC6B5DE6C2CFDCD13195DE077586B8EE01E00B6 468B10A53FAAC1DD846E2A01681980D444B6AD0D34C34EC9 CFD9341507878EC9FBAE49SF5A20614BDF3E4B22DD285E6 |
| 35 | 3 | 1 | 0x3ECD476669A04A260414FD16F3F525AA060F20ADD9334A2 9A9D9F90618916EF51840C8F53AB596297F0782BEF426E8B853 9C9FDE970455B58FS33FDAC1711DE6310E7596ED285E |
| 36 | 4 | 1 | 0x3D6BD09A3DBD9ECCC1C584E71C87221CD266087C7A692D 3EFF2D5F84DF2011EA3675853A61CD75D23600F8C115E03406 AF914938170256B86DA5646CE0211FFDCD76A9A5E8D840 |
| 37 | 5 | 1 | 0x27F0DA91D4AD1F39F0EAD459E2705CB2CA029A8E57592F1 697877199FF707D0411D6068A0664594D89568460F268A225BB 2AG0ED043659D779EA84656DEC0322F8C0CB 111 AD2C8 |
| 38 | 6 | 1 | 0x616FBCE479AAAC98B483FCF6EC06BBA84580EA98FA517B 3065A418CAF2C965B7AF2E7866B257390517016F25214900881 93372879FAA895465IE7B3C80BA1725CB781726F32328 |
| 39 | 7 | 1 | 0x357714863C5F477BE963806EA9D6EF6350BAFC1C183FCC6 BB47FFFEAA9FFD86358918F6A218266D624CA07092EC24466 C7F7120C1887A3F59A48EBAB67F24A6E8930B862F509A3 |
| 40 | 8 | 1 | 0xABF49D0FSB9C8406BD70B3FD83758768CDBA98164B929A 1EA18D59BD44B80F9BBEF9D1CE51E4EE1CF21F6CCF18A7D 4A92C26C121A22FC95663F0B55B892CF7D3D65812A503DA48 |

(continued)

| Index | IDcell | Segment | Series to modulate ($W_k$) |
|---|---|---|---|
| 41 | 9 | 1 | 0x6898A2FCSC36DF0B84380FBCDE70812390B644E3B5BEA87 D76C9123477638B331BEBC075664EA58C15680263664C48BF3 411C3C13789C504AOIFB4C7B9AC86AA524075E52C6A90 |
| 42 | 10 | 1 | 0xE7709988D2D2D6ABC6CEFB025FFCAFCA4C0E75C883529E A439B75229ECE88FB5BD5D3BCA17C25BEB6575D932D01B5 A63E044102E208C071C734EBA55712E122822ED2F2B379A11 |
| 43 | 11 | 1 | 0xE49DCC8627542BA30FA500DCC23EEBF5A54B490EE7632C 6BE57C724C3E74CD199930AB1D929D425185E2E1220CD2300 F487392F4DC29416D332F13F8E760571D99617B263F387D |
| 44 | 12 | 1 | 0xEE4CBD9B0EC65DE6DA78A2A205E5908B74127BDE612A9 BD2D8F0C6A2B9E675401A9DDAA30FF9A55E87DAFFA3A33E 53AAA1D96A60B326D7F6FA147098DD825BD0FB13ADDFE01 569 |
| 45 | 13 | 1 | 0xAD7DAD0BCA42DEDAFCCF7E57DC58D00E691E81C04B98 B2EDB66C66570B204B8352A08744D8A603C2A7769C7A9EE93 8189A45737886871E5C4025EE594D827C603E3A49FD45519F |
| 46 | 14 | 1 | 0xF8F29BA0D2FA2D529EAF2CE9383E614F5AE8CA06658DD0 39AB2C9912DFC7CD1BA9744339E537850B7E4EA564819772D 3320B1C7BA73EC24D90B8DCE17EA5DAD53771F68B050F43 |
| 47 | 15 | 1 | 0x9CC0ECC9E7E8940DFED1332AF492CFD39A21F2820394EF0 523019EE5290A2B4281FF032C238A6BE41116C274E918F34F3A 27B5F147E10D41658CDC7EFEDC3135255C2B83B0AE6A |
| 48 | 16 | 1 | 0xFCE9C41A74CBB56634447836109869E557C5A0FAA1D4566 E36A51258CE6D096FBD3E0B7193418D9DFCBD27693F8A5072 425D4E3F33DB5AB45B1EF3E11A6730BED42961DF0354CD |
| 49 | 17 | 1 | 0x7941B66A275FB8F0BAA8EF7FFCC36AAA660113B66BE476 D629AE512E489341F6C9F84EC1BE1C05CA3C850D20B1A12A A9C94E1A6541C29A9B4BCD41B94460DEF2E9643ADCE86728 |
| 50 | 18 | 1 | 0x0A91F390213C9B2ED372BA19FC42EE85AAB2598B58D2F71 84EA920546D6A81ED316551B74B341E238A7FB83A4EF7D9EB 093987771A6F4D0AF1F72752FE3234793D3CDC19BDFE08 |
| 51 | 19 | 1 | 0x96949ACCD785385AE8DE99CE42BBB73B996A886115A78D 0606AEC14D2E46E849BF88F9A2E17C2494704F1020CEF85FFD E16B7483DBC6A130488E3AC586E528A00B90134776E08C |
| 52 | 20 | 1 | 0x53FFBA26676A4FD1A6C30B8E4EA02DF535C922978CD24F6 099C25003567F207CC5851656C5FD0D3F071942A16F1DB48DF BC26BACC15A1E618FF35F3DC3E141E3666BCA507ED72E |
| 53 | 21 | 1 | 0x7F3219ABE1389DBED8FC2F1C9C0FCE1974E71C224E1922F 4CAD42E40AF15ASECDB14221480F964E67BBD345C44DCA08 53548B399E3DF4D054D176C0804D1B1154152BE973A8896 |
| 54 | 22 | 1 | 0x8D5552CCA9EA46C991FF81A35873F43C963E02ED24C4102 A79F5EB5EC25814511BA5DD2FE9FB9699E7ED76F965B24748 AE1A4A3A590F4F13E4722CCE399006F79AD8CE673178F7 |
| 55 | 23 | 1 | 0xDB74FFA478268CDDE2596ADF9410FD83FCEDBB07C6DEC 7A3422A6CC66EF901C1534EC2A83E1A89BA207C721ECF3D42 918FF40B3863379FDF3CED7A9CC86E348CAB032F8FAAD9CD |
| 56 | 24 | 1 | 0x5811ADD9240A7B3AF35CACA6EFCCF4090A54EBF33DE54 C077192354DDEB81CC968D18354090B09D7472C83E1696E195 45F08136EF20CD74656BCD31296066E03CC89E22E47CF47 |

(continued)

| Index | IDcell | Segment | Series to modulate ($W_k$) |
|-------|--------|---------|---------------------------|
| 57 | 25 | 1 | 0x871ECE60EDD2E19360D13862A15242250635774424B22465B 3EF625E72072B7C45D81076DB4A5BFD5BE146F15CAA84DA0 31763DAC23BBBC54249E9878EC465F3EABE0B7AA497B8 |
| 58 | 26 | 1 | 0xD8259BAF89D3E13242CCICDBA9CO281A09919D24ECF5BA 83CDCD81E698EAA37DFE3E5802B3395B80A3DE91CF6C4BE2 D34BBE985EE4041C4290DOA9185F115C963AD536E4133426 |
| 59 | 27 | 1 | 0x1203A1FD3F7B8E9D97A3812D4375D42BC9E8F0E393BD669 A8099407EC0356DC45FEF848C98F3EF32A9A850CC67CE43233 9CBAF38BBA7DDOC94BC03B4704866509255E28450E459 |
| 60 | 28 | 1 | 0x6A78A3F0DC5E4FA504580C37F5416BCC4A2BD51FC1A7147 1BD1433EC3DD924E7130A7B2B331AB0B4AF6CF94C045A9C2 46965F46478D939795887EE3320BBC2D5DD5FFB06F894E8 |
| 61 | 29 | 1 | 0x3042F24E050BAB38880A07BDE5D28AEE4AD59E0D71AB59 824122E80F8FF67BEA1ECC865F50B25CF5095C642B800E6A4 D132B49E5968DEBDDA029A227AF332CF034BB937B471603 |
| 62 | 30 | 1 | 0xC82853465FBB213A85A52888464E5D38D997F6C31966A94B 452A2DE853CE38010BF9EA930BBD318189D5D2D0BDB44652 48A2E8B481021531BE01F5E0FF1BAB75370C57B36BE6E9 |
| 63 | 31 | 1 | 0x2B17EC947632DABA3A2E11022033F20F873032F51F0647111 11D0C215E9B84C11A9E70950977527960700B37C6FECCA57C3 5A91873C935D7EDC22CB44DCC251396173CAC82B912 |
| 64 | 0 | 2 | 0x83FC05D6DED982EB95B06E16C91EF94B441BBD4868C09E9 B3A251AD72427F2124607E151796070C2819E395EB68A2C5973 91636333A7E492B70D8EA7397FFA1B28C20E0820CC45 |
| 65 | 1 | 2 | 0x45818FBAE49B983DB9B8FBEA1E816823430CE47BD159317 3605CA255CCCCAE73C7283336BCBC94133DCA64D675BBA8 48A3E1C2EEE35D6085F06E72EAA696FBED6EA545F27D3692 |
| 66 | 2 | 2 | 0xA005745E452ACE6BDDFC4A9F6253BF4B467C93ACFF0F663 A3F5949F15A1D266DEB0D26EC16D2A083F830E878A0300D74 CFA3266CBBF3F0244ED56344D6AD5D887B3179CE56890D |
| 67 | 3 | 2 | 0xE52F56367EA45E4683E020856D05D08391D3D84766CA2253 1B3EC6BE682E76B6ED7BCAABC3AB6BDE32C4F700D4CDFF 26F79AE1b499D2B70EC389AC3ED5E02FDF5C43B296CF965D |
| 68 | 4 | 2 | 0xC5C62E3A9HA0F28BF6A67B1DA2486FED7110B08F0A934C 930AA035290D098857ECF3A069203A2560DADD5016802D9C1 596526C7F1DA7C7B53360B0A673AA8634FB94D5838DC3E |
| 69 | 5 | 2 | 0xF9E176A9837BF970D5FD51732ECB8D90FBD12F62B62F938 BE07915BABB0C6596080C832CE7FF914C849B9DA66F2380F3 058F66340A34CA43583EC8EDC1E5CB5A2A25436E72292D |
| 70 | 6 | 2 | 0x5C26DB2489BE5197B20CD6B38B181B7789DCB90881AAC4 84317B2F40B44884144A1B15BCB53C8E30FEC419861C54B5b1 58D9719E448B8A8F455F5B116275D796329059CDF682D3 |
| 71 | 7 | 2 | 0xEF35242D5C426C1EBD9563A761CFBF11A531ACB938922EB BA5227D8292585B777783972DA79C853A2A178601E6CFEA353 80045B50EE628F13AE3EC5B72FED52F92F731BB594DE8 |
| 72 | 8 | 2 | 0x17FBB33193C68A1CAA8CEF5CB9A7FDFA1E89994F1779D2 D0DE69DE75A6B338A07635C80A58722BB01399252F6C46AB7 AEA79A6FC05F383F89ED65C49A2B9FB0D82A6EC03DD61F5 |

(continued)

| Index | IDcell | Segment | Series to modulate ($W_k$) |
|---|---|---|---|
| 73 | 9 | 2 | 0x076C1A1DCA870DF36638307F891A52F737BA2B54EC0AD1F C5424D4F32DDE168ACE9B08653DEF8A23BF37CA3D306138D 698A133834BFB65BDE57048B9EEC630B13E91EDB1B52E8F |
| 74 | 10 | 2 | 0xA6800969ED0CE80A76FOF9BF7597ABE76DF60F243EE529C 63AF72BAD6AB8B3F0B09DFC132C2B006827E55E352E3940A3 BB8EE3526522ADF65AB76492BA41A393740A4B85CD5113 |
| 75 | 11 | 2 | 0xb4817485E539E02AAB074982A56DCbE867C606313194BD66 B4CF8B9E92C4F9FD138B0E6EF36F699A3E6DCC46741B8CB1 6389EBA2C745398A30EA3102B6BA4FE9A8DA9605F929FF |
| 76 | 12 | 2 | 0xA3E438CB9EC48C4F4DD92C24950D0F1EAE7EEE920501C2 C82531EDF8AEE3531F8D6B82D28C1FE0731088489FD215D192 02DAEE0A57E3E1634C7A1BD5395CA64C64CI4E5C02D436 |
| 77 | 13 | 2 | 0x8F9339B406037D35ADB9858576A62AF6139FD2B02D381C7 DF147A274E145F76DE5687AEC5BD3A715E0E893EEB6F24573 D4017B24B30D4357E339B104601FC2DD184DC9A8F0D76A |
| 78 | 14 | 2 | 0xDA85062511E22DEDB53797BDBEC8B0281818E890D438CB5 A4882E4011FD5EFB2192C0FEDEE598372C7C068EF25F98970 2A8A9F0F52B197E9C910BB63F467E53BF46A45F75C22F6 |
| 79 | 15 | 2 | 0x914DE1436839A8E2FDD4EACCD645C3D29E522E19E0055A2 510679A977772830824C7363461CBF5D662456DB798BA72AEB 67FEB2FC28DAAD3FAE0048727CF6E9B237A82489790D6 |
| 80 | 16 | 2 | 0xA21E09CF0A98EB012E8914A31BE5BE53F47AF5650B6BCE2 812F65C994A100EA41F732830EB3F6C6F7028BC9FB3C5D108F 63315DEDE8EE82CF5DE892032688E1C367D8567A20ACA |
| 81 | 17 | 2 | 0x6E11F29AE45A99D74D911777D1DE60495C2DAF1705C7844 FB7FC0A01247F3265F45D90A198ADCD0DB98A3CE22ACF24A 77C737E5BF99DCD7EFA6B6096B70C572996B62E7814236B |
| 82 | 18 | 2 | 0xE9F8FC17F5361DBCDD8F18F28CA90B618DF6B56D3481C9 E3B7FDBEA6D55FAB32A4310A52AD7AAA26D082B38D4D8A 2FCB70A3C6A4167515CA710E8F9B237F64B4D9A8C3CE8DF0 85 |
| 83 | 19 | 2 | 0x11FDC3B4712101D717D0EDD7556EAE0940AA1683D4CA4C 22A7959436ECCA5E08A4BF2BF9EEF4BCE5E3E48DD77EB418 F6B84BF8937CE0CF9DAD247A64E9E850373FEE3D673F47C2 |
| 84 | 20 | 2 | 0xE8784553C091233730B7DA704B8A02BEBE45E5DEF4361394 E380E417FE38571E641ADF2603402B8084A2D1318AF30CD95 AD014D553408393AD345C05D62F43SC709948233EF55B |
| 85 | 21 | 2 | 0xCDD6E932F9D2FAD131E7AE666B758CC4BB60C60230FE14 494D0F77E89A9BE726FAF8F9465AD0262D75C0A5374165A4F D2B4C602C0FF123F416360C112F6F95BD6790F81ACD858A |
| 86 | 22 | 2 | 0xA2702DE422E1CBADAA8285C1C3B1F41D44561BCBF10546 6DF8070E604C733DE579755BCB8237C8DDB55A865B213D192 9EDC553CE9B55994985F9EBEDF2A9F524301 E3DA0498817 |
| 87 | 23 | 2 | 0x54487F7BDCDF87B1AA252798D7E5AD97E6F3263B7986B1E 3E637852EDC83FA360676C04E35A1F5045B0A0B7DE9269F8A 0E17F100D9AC78D873AE59BA0BA3E8AB3DDF928AD58F9E |
| 88 | 24 | 2 | 0x3461AA27EDE0A9F7955B469C41AE1485EFBFE4EB233B0B BEBSF31BB36AC1E72CA6BF06B1E58F8612096CFA7289DEA8 927B6368DC845DC8476074B83F3C1545A17F73EFE214A3C9 |

(continued)

| Index | IDcell | Segment | Series to modulate ($W_k$) |
|---|---|---|---|
| 89 | 25 | 2 | 0x2DDBBF4F82EB33001E46F08D17DB89DCE3C7CC127F6B7D 17839FE17A86F69178A1903E91857147348B491631336CB5D71 0382B59FF71416FEC2BAF0A0584F2155EEB71C54F84C4 |
| 90 | 26 | 2 | 0x762E2454401F66455358322AC0CFDF76EB18EFA9684A10F0 F527537A54E75FAD77BD89E0D47980793C7B79B922C17792C C84BBEA81F6637192B74407ASB859EA1C873ED29D48FD |
| 91 | 27 | 2 | 0xF74BBB6C4B97071EBC19F3FE7840A67A3959BD9936335A4 F8BD10C9CFD925D8388C31B947BFD318FFC8B0967C132A602 BC31B2983SAE070006A50554CF3CSF85D56832ABA9CA5B |
| 92 | 28 | 2 | 0x06493F32F3CA54692CAE2579388B97D99B5D540DE71F8B24 05944C3A4FF18D7D45D4026DB9A867B85870BE6E23C9A8F84 332D29B84B0303BB5179DFD89B56A14A37ABE053A0277 |
| 93 | 29 | 2 | 0xC88A3A3C0211A21661FD2B30937FOA187B6601E366A8FC5 BCD4210E2D5D3365B22D4D63273F822D89EC1745304FBA4D0 A9295AA51212C11C9D0A31FABB066289D8227B5BFDE8A0 |
| 94 | 30 | 2 | 0xA81E35C6A92953C584FE5FB3B6F1B0A532E91A49DB703D6 E20D796F4532630C1 D64DCEA580188BDDAB37722AD5DDCC 9DFE7CFEDE1518D8E2ACA842F3570C7F381EAB9C5E4D485C |
| 95 | 31 | 2 | 0x08C0CC1C53E52AA366AFA63A48EBE2F7389C8A33CEB201 73432B4828D68A547D4673E27F942FCA95942029CFE9F4! 3FD ABE1D0BCF95022C5B99C1B229D151E9D3CA0A122F1BEEF |
| 96 | 0 | 0 | 0x9774EF2FA326AB19DE599803EB48740C90995A4508064B6B 19E58304229C5EDC578EF2C7030D4D2A01 C9FB7618E7CB856 4816354DD61EE144D7C94AFE8AB966875131B9F7C18BB |
| 97 | 1 | 1 | 0xB9FBD947B7F9F3C8F6D3799E095BE558E6A2D0550C0DD0 DDC92CC7BB53C1FE80D536B 1FAE89C9224E3504629DBF0C5 457944A72769B7162FBBOBBE 18189749D3 E7E264CFBA7AOE |
| 98 | 2 | 2 | 0xFD0E15EC140B2E87817AECC16F134B66221C759CCF0E5000 CDC0A3BADBB354D6845D745C22B 1FB78C4205ABCF689495 DE555CFFB4E4164A9ED06E484A192308A8CA89048A92C32 |
| 99 | 3 | 0 | 0x28237E963DE488B97083F5A76BF5A861773DB61108461A8C B8FAE918887897033207CEBFB83380BCC45748732F9752C86D EA5F5EE4BA741C6DAB59375DDCBDC6EFEDBCD10DF3C2 |
| 100 | 4 | 1 | 0x023B7D4F9CA92D1E796C749B7664CCC4E8558C5CF20BF70 2E39BC3AE525A9FAA6581F4A22EF6829A44156DAE4CABEA9 C6A41D5A4325C02980C8FA4621A7FD08D874C687B68C706 |
| 101 1 | 5 | 2 | 0xB7FF5E696A6923C504E2A64A097EB201EC52D7963D9D5DA 46051A4EBA8B2C2DB9FC4249ABF2D8CCC881F8AAD20230F 1B66D5D48CF2BCC5CADE7217E25FB9F6CB93CCE4111A33C 6 |
| 102 | 6 | 0 | 0x6870AA97FE0FF504C4247EBFA8EF1A21B6EEE100E407F293 086E1F48C7292BEC491DDAF0E2CF02455825089FCD985F77C DC4B561A6B8CD60CE31CBE6D467CFB4D153746FB7BE0D |
| 103 | 7 | 1 | 0x91466310F3C4F355233B54C0AB8CB818780691443781B71AB 6FB8F6CD516661E39075B4207E55400B081FD79C524628C8FE1 277BE1A6165ACB5F154158D26593FED2C48EF66268 |
| 104 | 8 | 2 | 0x45F8EB9235B6DC375771B69789AFEEEBB806965E6931A844 F370CA14AA982635C54EAOBA9733 73D9FEO 1 0993B41 EB8BF2 C219B09AD13B4FE7FDC7295C55858834490674637ED95 |

(continued)

| Index | IDcell | Segment | Series to modulate ($W_k$) |
|-------|--------|---------|---------------------------|
| 105 | 9 | 0 | 0x3AA7974818884644F5C782A5E71AF70D91220EB0C468D079 AFB7DF8033D3AB54BC728657D60B349C575C8B3DEC403A6D 406E3FC4D016655D406B0B78389CEFCFF8A37D867A44DF |
| 106 | 10 | 1 | 0x1140B404D18CA769BDC1E1188BBB5BFA3B87668D158B087 5F4D4EE90ED42974B5A02A6AAFC6977EACD194CB9E8423E2 931F2CD9AEF6C90F44EC626C56518360D20AE97219FDE89 |
| 107 | 11 | 2 | 0x76BE5786CE3C33A20A3776587F83E6C5280BD4DF20FE6C52 D6BB582957E0CAEB988B32C3DB58027815D8618FB6FDB 1 BC F9E871D6C552AED5679BE98189D95708FE92750C5ADE33 |
| 108 | 12 | 0 | 0x33397C2D850E76B116A82F95C766D2002B9822D52E09B196 8BEF3DFD48D9F53D5296F15S9BEB0BC7791C1F6B666EE68C6 05A2098A4A0BD57CE4F7A843068A8BA3BF0065ACA53C6 |
| 109 | 13 | 1 | 0x894B11E2BB6884D9FFD78C6A8103F3BD44E6DFE48CD0DC 89C63A4F8BA95858545D37EC1652AB2C073B99BC667D1F396 C87F9902FCB08686E563D0D30EBF3D65756A63F0037C240 |
| 110 | 14 | 2 | 0xDD08538B0939E852443E8801AB36C0FF50A6A0B63BBBE96 9F6A5A60BD6EEF19D070C3A14366EC789D39D07CD8891491F DB3C7EF57A0A310C8A4DC0A03D5DB84DA0D6911C4CBA9B |
| 111 | 15 | 0 | 0x7FFA4EF380C6504225EA6C8339E130DB7E69577E9C46CA49 4F66E2D5B25A256444606103A821615C2CDEA721D153669E50 25CDC37904CFC16A84E3B745079E5F1F3E08B0684BBB |
| 112 | 16 | 1 | 0x8A608CAD1CD85FD846FB2A39FB61EBF9A219B9B7499179 C2C066F3F78F3B3EDEF15B7227C650BEFB63C950E1B52632D 78D1A0F34552BA138C877F09FCCFD30511E340F794D154A |
| 113 | 17 | 2 | 0x775CA156A4COBDB8FE5FF3CFB91FC7BC9DEAF1B8B3362 D06C9738D332868BBA3B18A0A907EE7918D95510298E42F44 B7BFC39D9E002EE24D 1806EE0436B92DEC06DA3FDA2230F6 |

**Table 309a-Preambte modulation series per segment and IDcell for the 1k (1024) FFT mode**

| Index | IDcell | Segment | Series to modulate ($W_k$) |
|-------|--------|---------|---------------------------|
| 0 | 0 | 0 | 0xA6F294537B285E1844677D133E4D53CCB1F182DE00499E53 E6B6E77065C7EE7DOADBEAF |
| 1 | 1 | 0 | 0x668321CBBE7F462E6C2A07E8BBDA2C7F7946D5F69E35AC 8ACF7D64AB4A33C467001F3B2 |
| 2 | 2 | 0 | 0x1C75D30B2DF72CEC9117A0BD8EAF8E0502461FC07456AC9 06ADE03E9B5AB5E1D3F98C6E |
| 3 | 3 | 0 | 0x5F9A2E5CA7CC69A5227104FB1CC2262809F3B1OD0542B9B DFDA4A73A7046096DF0E8D3D |
| 4 | 4 | 0 | 0x82F8A0AB918138D84BB86224F6C342D81BC8BFE791CA9EB 54096159D672E91C6E13032F |
| 5 | 5 | 0 | 0xEE27E59B84CCF15BB1565EF90D478CD2C49EE8A70DE368 EED7C9420BOC6FFAF9AF035FC |
| 6 | 6 | 0 | 0xC1DF5AE28D1CA6A8917BCDAF4E73BD93F931C44F93C3F1 2F0132FB643EFD5885C8B2BCB |
| 7 | 7 | 0 | 0xFCA36CCCF7F3E0602696DF745A68DB948C57DFA9575BEA 1F05725C42155898F0A63A248 |

(continued)

| Index | IDcell | Segment | Series to modulate ($W_k$) |
|---|---|---|---|
| 8 | 8 | 0 | 0x024B0718DE6474473A08C8B151AED124798F15D1FFCCD0DE574C5D2C52A42EEF858DBA5 |
| 9 | 9 | 0 | 0xD4EBFCC3F5A0332BEA5B309ACB04685B8D1BB4CB49F9251461B4ABA255897148F0FF238 |
| 10 | 10 | 0 | 0xEEA213F429EB926D1BDEC03ABB67D1DE47B4738F3E929954F83D18B216095E6F546DADE |
| 11 | 11 | 0 | 0xC03036FA9F253045DF6C0889A8B83BAEFCF90ED993C2D79BD911CA84075061AA43DA471 |
| 12 | 12 | 0 | 0x1E68EC22E5E2947FB0A29E4CC70597254B36C60331EACF779FE752D3F55DC41ABFC7DC9 |
| 13 | 13 | 0 | 0x63A57E75A0434F035AAC4504B265081D497F10C77928B71797C5D6C6824DCOF23BE34EE |
| 14 | 14 | 0 | 0xC57C4612816DE981C58FD6F8DE9DD41F2422ADBC522B0CE31F9A6D5F2A126DC08F69FB1 |
| 15 | 15 | 0 | 0x978256AF184E7ED17789B33D324C711B36BFBCCE5446EB03687E9A0A839C7CE156104D2 |
| 16 | 16 | 0 | 0x011EC823157DD73150640CEB7DDB0A1F8F91E09599A851D5C7CAF687CFB752D297D82FC |
| 17 | 17 | 0 | 0xC6DE82BEB7F57B9120E8A376D85C8F70FDC65BC660402DAC4AE6002EA2740C4F9E5973C |
| 18 | 18 | 0 | 0x4C74929D6F9FAB9E5BB761026038E076F6824295E0AF397806ECEBC6DC713F03ACDC27C |
| 19 | 19 | 0 | 0x13E1E85C2234D0F3418001A35F135E10C6C918C36BC659FDA9D655D288AOBDAA8BF489D |
| 20 | 20 | 0 | 0xFD4AF2D8F4F08F1A7DF59291C9AEE788F641B8231CFB813376E0BEB68DFCFCBBE552445 |
| 21 | 21 | 0 | 0xEBBC77A493AA0C52C62F25EE5E8D0701F50386F49026FA31487C9FD5C5206CE4EB00576 |
| 22 | 22 | 0 | 0x134F936F9E875842587ADCA92187F2FC6D62FFC3A833D8CDE465F9972ABAA83763AAEB7 |
| 23 | 23 | 0 | 0x3CD2DA70670BC73363D1B4A66D280FF6AA7636D07ECF32BA26101ESEBA1594FB8A0420A |
| 24 | 24 | 0 | 0x918296B2937C2B6F73CF98F85A81B723D1C69DBDF3E019749C582DA22E789562729D475 |
| 25 | 25 | 0 | 0xC323981B8B2240865F48D61AE1B3B61D88522B7358952F949D4308CA15D1EE8FDFA683F |
| 26 | 26 | 0 | 0x7514A6FA5FBB250C5C8CE96F791D676036C344A44B24284477B44CB3E758F8BCD58F05B |
| 27 | 27 | 0 | 0x84C7FEC6E977FA1EC0C7CC9E0D067C73D8F846F82ABB3456D2104E1448D5A58D5975152 |
| 28 | 28 | 0 | 0x4841AFC277B86A0E067AF319422F501C87ACBFBDD66BFEA3644F879AE98BA8C5D605123 |
| 29 | 29 | 0 | 0xF35EA87318E459138A2CE69169AD5FD9F30B62DA04ED21320A9F59893F0D176752152FD |

(continued)

| Index | IDcell | Segment | Series to modulate ($W_k$) |
|---|---|---|---|
| 30 | 30 | 0 | 0xA0C5F35C5971CD3DC55D7D2B9FD27AA17A198583F580EB 0800744EE5B6B3648DEA95840 |
| 31 | 31 | 0 | 0xA6D3D33AD9B56862DBF076E3ACE6A3150510CGC8BE77D E4E6E10EB5FE163765647D07DF |
| 32 | 0 | 1 | 0x52849D8F020EA6583032917F36E8B62DFD18AD4D77A7D2D 8EC2D4F20CCOC75B7D4DF708 |
| 33 | 1 | 1 | 0xCC53A152209DEC7E61A0619SE3FA633076F7AE1BAFFE83C E565087C0507BA596EOBD990 |
| 34 | 2 | 1 | 0x17D98A7E32CCA9B142FE32DB37B2BF726E2SAA7A557FFB 5C400B47 A38B 16CF18EIEDE63 |
| 35 | 3 | 1 | 0xA5BASC7E2C79SC9F84EBBD425992766BDE5549A7A9F7EF 7E44AFD941C6084568638FE84 |
| 36 | 4 | 1 | 0x33E57E78A5696255CA61AE36027036DA619E493A0A8F95D9 915C6E61F3006CB9706BEBA |
| 37 | 5 | 1 | 0x09961E7309A9B7F3929C370C51910EBAB1B4F409FA976AE8 679F354C84C4051F371F902 |
| 38 | 6 | 1 | 0x508A9EBAEF3C7E09CFCFC0B6F444A09B45A130EFC8C5B2 2BCE87213854E7C9D329C9ADC |
| 39 | 7 | 1 | 0xAACEEF9BCDC82E4AD525185B07CBABCB74861D16F7C25 CFBA917B05463AD65391AF840D |
| 40 | 8 | 1 | 0x23060ACC5A125DAB207EEEE47B4EEE1E8466BD17DDA2E B3CD90D2AB7A758C213E6D7FE5 |
| 41 | 9 | 1 | 0xCA55521667BDA8B6F1B205201A51B3A0C05DE9EA06BC73 268730A81A992777021F46055 |
| 42 | 10 | 1 | 0x05ADFCA2F8207DC6FF8D1A85A1DD4694D4C48A838C4F83 3C532710021AC448A7B62B8DD |
| 43 | 11 | 1 | 0x218C951223D7B712DC98F8B5217388A830003C5F2A00F232 DD3475D2FC78C25B8D88FF9 |
| 44 | 12 | 1 | 0x79B94D24D721121EF678B7156F8D2666DE712BBF3837C85A 9518781903146A7B4D42A28 |
| 45 | 13 | 1 | 0x58AABEF6A6BDE4011CAC583C5104B2C6FC5A2980F856373 E5931A3C690245327581FA13 |
| 46 | 14 | 1 | 0x427D1A1718E338E16FCE6E23B4AD6D82A2144D53048F2665 AA94577AFABD25889FCB1F9F |
| 47 | 15 | 1 | 0x337FE0E4C15A22471AE0F6B6F91161A7DE2E1403D73587D5 C8355105D2F70642B2CE425 |
| 48 | 16 | 1 | 0xA3FCAA311B536AC9DB39FED9F4E996506B3181C58D6B7E 04157A3FD463F60468765BCFD |
| 49 | 17 | 1 | 0xF484FD1F57F53A4A749B86148E0B1D0653667CE1393198875 DDBOAE9179BBBDAAD53A 11 |
| 50 | 18 | 1 | 0xA3E9ECF1E6048562BC89DB6168E708855F0D4AD29F859EF 36C9160DF407D85426233632 |
| 51 | 19 | 1 | 0x890519376D1FFAA2894EABCD6663B0A3C2411982C17B012 70E0FB0B289D4BC8C3B83DA9 |

(continued)

| Index | IDcell | Segment | Series to modulate ($W_k$) |
|---|---|---|---|
| 52 | 20 | 1 | 0x09847B6187BB5F6F6728B4ED610088FAD9DADFC00748E9D CD8A0CE320D6C991654ABE05 |
| 53 | 21 | 1 | 0x3285AE0A3D196313659C37BE1C94D61D20F11FD49D9FDF9 D1026FF5763F02CB78AE135C |
| 54 | 22 | 1 | 0x0069D3F34D0D455AFB45FEFDF716333B785C6BDA90DA23 F1CC68BC6A1DBC916C595DA3E |
| 55 | 23 | 1 | 0xAA977A8BCA39381E7C35A1ACC7C4F60421C0862BFD6106 C7C025B0676EA0EF68972DD8F |
| 56 | 24 | 1 | 0xF310745C497094ABE56E0490C0800319DBE290553E696B685 9635AF03B121F79D925D19 |
| 57 | 25 | 1 | 0x964DFD350B9C7DFDC7F6F7C43283A76F0D613E48A5520D1 DAF761C6F47E389B43A023F5 |
| 58 | 26 | 1 | 0x6D767B88D28A455CC3B56C942BAFD8E465A50FD2C22FE6 162E03A9AAC3C1CC899800610 |
| 59 | 27 | 1 | 0xC5491C6CA3D998906EC1482F815B74B7C2E3816B682ACC6 009AB7EFF348F0E9CE59C754 |
| 60 | 28 | 1 | 0x6D8EE32D30E19D93A0E5AD8226BAE9CF6FCBA17CF6E67F DC5A15A81ECB8908BEDD77C80 |
| 61 | 29 | 1 | 0x98F8BFDF774C7A249418E6FF4723D6E6AB2F091CDE4DE1C E11D3BD463B509FB716940FD |
| 62 | 30 | 1 | 0x65300BAD8FFA21BC7DC2C1F79FA97A9F469CCC9B270A61 759F34D6276F57CBEB009CD21 |
| 63 | 31 | 1 | 0x6F36BB6D5A7DC4FB720439E91FF0DE86DD6C4B93CFC427 1F2BCC6169616E3AEAA19E360 |
| 64 | 0 | 2 | 0xD27B00C70A8AA2C036ADD4E99D047A376B363FEDC287B8 FD1A7794818C5873ECD0D3D56 |
| 65 | 1 | 2 | 0xE7FDDCEED8D31B2C0752D976DE92BEA241A713CF818C27 4AA1C2E3862C7EB7023AF35D4 |
| 66 | 2 | 2 | 0x87BF4954022D30549DF7348477EACB97AC3565B839460CC6 2F242883313B15C31370335 |
| 67 | 3 | 2 | 0x82DD830BEDE4F13C76E4CF9AEF5E42609F0BDDCB000A74 2B6372DD5225B0C3114494746 |
| 68 | 4 | 2 | 0x4E06E4CF46E1F5691938D7F40179D8F79A85216775384BD97 966DB4BBF49FB6FAB8F945 |
| 69 | 5 | 2 | 0x64164534569A5E670FDB390D09C04802DD6A16B022CADC7 7EDD7464AFED43C773A8DC76 |
| 70 | 6 | 2 | 0xFB8769A81AA9DB607F14A6A95948401F83057CDC9C9C399 6BA5821403A49F00A4E35191 |
| 71 | 7 | 2 | 0x77710D6F40B4F79CC63F678551C3EC18FA9DF2C82E6C8F41 5DADFD63264B7513180070E |
| 72 | 8 | 2 | 0x503F196BBF93C238BFD5E735E5AE52E0DAE64F5E2F4C3B9 2E553F51303C4Ab4C4403BF3 |
| 73 | 9 | 2 | 0x5FD4A6894566678C95B9D5A59DDE5366799045FEB03A2BA A74094140E9068C61C2E972C |

(continued)

| Index | IDcell | Segment | Series to modulate ($W_k$) |
|-------|--------|---------|----------------------------|
| 74 | 10 | 2 | 0x95B584DC40C8B5DEAD63D48FCE65B1E61BAB4C597D921 DB12677141E2FFE7C0AA3DA0D5 |
| 75 | 11 | 2 | 0x985763AB6CC8934DB8A0BE738A7AF1D1FA3958C1F9E2D6 A51A163E47A0A6E5FEB759FDD |
| 76 | 12 | 2 | 0xFD8D45F00D943AD986BD353D61C6746DBF8A309B6AE1C1 73B880D957B76DC031A957E8D |
| 77 | 13 | 2 | 0xAE4323534F6EFB1A20169328417885EF304FA220389FA9C26 07E5A406F4CE4A7498A39F |
| 78 | 14 | 2 | 0xE5205579893BE184CB9948C28E2F9AAF699D47B6E5EOB219 CBEAFE4BECSD561BD809E34 |
| 79 | 15 | 2 | 0xAB11D6941478D36D5695CE813070DC1E32122A39083E53FE 373660AEB125D83383FBDCA |
| 80 | 16 | 2 | 0x188A09C46F1F11206FF9F15CFB5F6CD2F26C4BF485EE37D3 650A595064F76CE34E40EAD |
| 81 | 17 | 2 | Ox4BICDE25539A56CEDC45FE7F54C38CF155F4FBIAE868F6C 3952D07014BF828E810BDE2D |
| 82 | 18 | 2 | 0x16CA8F8C6A879E865E3611EAC389D56AFA3E4E84CDBB73 567BA4A160249C4B680A7D9BC |
| 83 | 19 | 2 | 0x39D2B08AA0E2E8781476027B41AD72F8D9838B7001AADF D33A92D81E56ECBB2C9378D58 |
| 84 | 20 | 2 | 0x8C258BC80D4AD125F335A5151EDF9E9A463E06C5CSD046F 82E5DC3D73EF4D2231C5D14F |
| 85 | 21 | 2 | 0x41A029C6356C825585179C5348EDF07A3AC2022539AC28DC 4CD3C1DFADC8EE9644CD939 |
| 86 | 22 | 2 | 0x0D70A77CBE9804913BFBEC4FBF917C5CD3580F6062BBAD 3F99ECEBB4A9EBB87523AB722 |
| 87 | 23 | 2 | 0x6A00A30901F9FDE44B4F1ECED44E0BCB943B29519F313BE 4496D34F39B154FC2384CB75 |
| 88 | 24 | 2 | 0x95351107A8BE6ABFC24C1292FE1A0FE677CBFD04F2E8117 8CAA9D294730EF9C946F676E |
| 89 | 25 | 2 | 0x01F21470FD9B1E0B3C6B2F7C0412A15764C277D61BA2EE3 B3769DE7ADACB2BB29918FB7 |
| 90 | 26 | 2 | 0xA578ABFE155369440FA3D4DF757CCA596469BS0A0E56BFE 6010DD63E67CEDB86BB1EF39 |
| 91 | 27 | 2 | 0x1E1CFFAB031836777DE5D168A9246C559574C74CCC06405E B406B8DDB7C9A6EF54A66A5 |
| 92 | 28 | 2 | 0x354149C2CA19A735F9CD04AF4922E8ECE6509B978B951F94 6FD4AD36C7F9C83624205E7 |
| 93 | 29 | 2 | 0x5A27E60DEA547D0D41897A03199F28A967AC51728E3B3832 5B4FBEGF1B85A7EE9B04182 |
| 94 | 30 | 2 | 0x784DA3B16B810FE3B851060AD7BD27D9D9457F6C8899A13 D311ES31B85SC15ECE6D3A2F |
| 95 | 31 | 2 | 0xD7DFBC65797633A8C13D3EEC781D48952338136063B579D6 9437B28B744B5A4BE18AFA9 |

(continued)

| Index | IDcell | Segment | Series to modulate ($W_k$) |
|---|---|---|---|
| 96 | 0 | 0 | 0x61AF26BD39A9FFF52826625E04ADA299385A373FA946D837 D754E6CFEBB26F5C03B87CF |
| 97 | 1 | 1 | 0xD77D97CDB93DBEAA65CAFA146F40D72B5E80944F750E07 325DC164ED60F32434BC7187D |
| 98 | 2 | 2 | 0x4529D9CA65AF49C1C39BDC18CFAB87E03FE4DAFC0A48F F1457D46B0DF66B414A23ACDDB |
| 99 | 3 | 0 | 0x33AC0261DAA57C1D611EBA1C730D50AFEE5BE3E849030A 4E891BC8C5F4C78DCDDFEA263 |
| 100 | 4 | 1 | 0xBED48C704F02A84F03BCD299D919DA56F7B71 EDF8AOF8A 25E8F8496F95A44CE2B9F74C9 |
| 101 | 5 | 2 | 0x0ECCBE0902EBF4B4C29506014A3706622784B7B2D5153E10 AD3112DC5E45277A32E79DE |
| 102 | 6 | 0 | 0x7CB4937989C7DFD9AA2D37235E06F993D3D4F5D515B39C A652F62397C08457D66BC5A36 |
| 103 | 7 | 1 | 0x43F23F6CAC6C43896B3EDBF00E1CBD42E2CC75E2A996448 F0FCF17F6779DD6E356FED11 |
| 104 | 8 | 2 | 0x72C8A209FBC4A568BEF03BCFE1B0D959F977B0963780B4E 54E2B9A1016344ACB7EE3E3A |
| 105 | 9 | 0 | 0x77AEB9E50DC3727849A94FBFFCDB5B9589AF50ABD8A588 08B9663058E17A2EBC496DF43 |
| 106 | 10 | 1 | 0x667123C89077FE4AAAEF15C635E976C6811682D478FFC7B7 21A76B5A38697DF4FB7D2CE |
| 107 | 11 | 2 | 0xCBD6C5C9BE55B0BE76AD03392E8A8AB9A86063DB31B79 290B447980BB841FD7E9DC6B9B |
| 108 | 12 | 0 | 0xC7D7DEF8B3C9C8667D8D65063B4DAD1FF69445C87CA71D A955D0CA23970E988A6EA4C83 |
| 109 | 13 | 1 | 0xFB246ABD92F9E560CB2BEC2317204C9CE22AD3BD19EA02 E90F5F3B7F4F65538D8ED098E |
| 110 | 14 | 2 | 0x29E74579472FDD8FFC2700B2BF33C649989DD8153093A7CA 08B50F7A5E4BAED108A0F0D |
| 111 | 15 | 0 | 0xA27F29D8D6CCD7EB4BBE303C3E9E95802DB98BFD5BBED 03B88304359D92E3EC108CA3C8 |
| 112 | 16 | 1 | 0x3FE70E26FA00327FE3B2BE6BC5D5014F588F09C17D222C14 6DD68B4824692A651888C76 |
| 113 | 17 | 2 | 0x41E91307EC58801CFF2C7E9CFEFBEB71681FAE2BEAEC72 D4E4556E99345D3BA4B369B59 |

**Table 309b-Preamble modulation series per segment and IDcell for the 512 FFT mode**

| Index | IDcell | Segment | Series to modulate ($W_k$) |
|---|---|---|---|
| 0 | 0 | 0 | 0x66C9CB4D1C8F31D60F5795886EE02FFF6BE4 |
| 1 | 1 | 0 | 0xD8C30DA58B5ED71056C5D79032B80E05522C |
| 2 | 2 | 0 | 0x8EB62664B3B2C5222DE18E9000561F25AAFC |
| 3 | 3 | 0 | 0x3B32299087C257CD31C67E4AA5DD697B0E08 |

(continued)

| Index | IDcell | Segment | Series to modulate ($W_k$) |
|-------|--------|---------|------------------------------|
| 4 | 4 | 0 | 0xC07E0B0C5DB44071EE6CEC40CA3135CB5DB8 |
| 5 | 5 | 0 | 0x89B08CD299A8AC757DB59107AF4E1EF1EE1C |
| 6 | 6 | 0 | 0x1B72E8C0ECFAABF050091382B411B45A718C |
| 7 | 7 | 0 | 0x5B33ED5A6303397EC3CCC35C8203A5A05178 |
| 8 | 8 | 0 | 0xAD1173C461254BF9181238319F93F86AF964 |
| 9 | 9 | 0 | 0x51E2005BBA69C858BCC741D84990B657271C |
| 10 | 10 | 0 | 0x21A03B607DD96F270CBC759B2A9BD6A84A34 |
| 11 | 11 | 0 | 0x4518EC4C7AD645D24AD949B42A7881403C7C |
| 12 | 12 | 0 | 0xF8B70C595A37315D301D378A4D2848C821D4 |
| 13 | 13 | 0 | 0xFF42582005F8382C5CC6298D757155B36B24 |
| 14 | 14 | 0 | 0x599EF40107CBB3B30AF945365494A0D60570 |
| 15 | 15 | 0 | 0xC6D6BE87F0D88458ABD22DE822B64E450738 |
| 16 | 16 | 0 | 0xE043896829F236B10A35014D9E4F26ECB95C |
| 17 | 17 | 0 | 0x2347472A610FC084C71460393AEF36CBE928 |
| 18 | 18 | 0 | 0x5F4D880DC516DC0B3860DA948225D2BC6770 |
| 19 | 19 | 0 | 0x9EFEEA99631FAF0D9589E9640BCD56C5FF08 |
| 20 | 20 | 0 | 0xFE792EF83B235B3D4A6447BED27035454BC0 |
| 21 | 21 | 0 | 0xB3B1B868C121C4555A64161B654A4FE81D70 |
| 22 | 22 | 0 | 0xB7C2D44078510ADD2447D93E8A1231AE3910 |
| 23 | 23 | 0 | 0x16A9D8F71CC1CD0EFA0008AA343A7A4ADA4C |
| 24 | 24 | 0 | 0x7389FDE96166E7E40F7A6778AA02944937A4 |
| 25 | 25 | 0 | 0xA0598A0907798B3465DD8CBD08565F0FB5B8 |
| 26 | 26 | 0 | 0x0E75B3C128085C954A25E5808FC5833A8FB0 |
| 27 | 27 | 0 | 0xBBCDA362265B4D4D2BEE80F635E638316280 |
| 28 | 28 | 0 | 0x660047B06A1B5FAE6A9F0679DBCA9B1A2DF4 |
| 29 | 29 | 0 | 0x2594AE119CB87E802D67EF7EE0EAE99474CC |
| 30 | 30 | 0 | 0x8FB3FA462D2CFAF842BB5319D9786A997C10 |
| 31 | 31 | 0 | 0x599E199B609C0C654DB053E8C94F343AAFF8 |
| 32 | 0 | 1 | 0xE0187D89220D11B5F60DAC078A5E2EED6EF0 |
| 33 | 1 | 1 | 0x69F57E074F14A10FEC6144C26E98C4688330 |
| 34 | 2 | 1 | 0xD2C4067132528AA41BBE61A9C171A382F768 |
| 35 | 3 | 1 | 0xB027CB82594D3900700B541A99CCD5FD5870 |
| 36 | 4 | 1 | 0xE9B565C61F73EC6633AIF2D96EC409495B80 |
| 37 | 5 | 1 | 0xEBD7E29110582C5951233AB22B03DE709698 |
| 38 | 6 | 1 | 0x0CCA91DA1B42BOB55C924F3208B1FAEOE18 |
| 39 | 7 | 1 | 0xA4213FFB85B56E27C74FC6ECBA359875438C |
| 40 | 8 | 1 | 0x1A37F92589686CFE5E4D4BFD8E2BC63AA8CC |
| 41 | 9 | 1 | 0x31531C7B2F7518BF59ACFB216FC74D09F2F4 |

(continued)

| Index | IDcell | Segment | Series to modulate ($W_k$) |
|-------|--------|---------|----------------------------|
| 42 | 10 | 1 | 0xCE026112DF00BB74E1B1F43B595112B16344 |
| 43 | 11 | 1 | 0x503494DE054AE395883AEDD8CC780188F124 |
| 44 | 12 | 1 | 0x8447E25CA9A0EE1CFB9FADB6C42B8F565B3C |
| 45 | 13 | 1 | 0x757C45DA8F140FB6E71024294B2439CDACFC |
| 46 | 14 | 1 | 0xF2A59A32B51CE505E45E9B5C7C7DBE880DF4 |
| 47 | 15 | 1 | 0x8DFBF09479BC91E466A539E077D2B26A8B2C |
| 48 | 16 | 1 | 0x1C6FB87D76DB82FFA1E492166684CACEE560 |
| 49 | 17 | 1 | 0xA32CF594137FDF1D4CCE6A1CF40FEC1F4AE0 |
| 50 | 18 | 1 | 0xEC4D3AC52136FA468F28777078C8A82C0808 |
| 51 | 19 | 1 | 0x30CABB208C9D6C774814A163765E4ACBC540 |
| 52 | 20 | 1 | 0xCA3448C6716F6F8D15D7372A3A4F6E825A14 |
| 53 | 21 | 1 | 0xABD1526F4A510F820B689F30C1E7B88C8848 |
| 54 | 22 | 1 | 0x94E4E2AE2C4E47FD7D0A154C25BF40F759E0 |
| 55 | 23 | 1 | 0x43BFFD566D85BE162650670BE1A3CA523284 |
| 56 | 24 | 1 | 0xD7644475A2E5EDAD1AD194242E3C841A03E0 |
| 57 | 25 | 1 | 0xA61DDBA416D1D14358647C4ACEF2503001E4 |
| 58 | 26 | 1 | 0x1F9047A8651D4D4A7C582469DC8C41B68E08 |
| 59 | 27 | 1 | 0xE0EAC02D975263F36D4BEF70669CBDEE658C |
| 60 | 28 | 1 | 0xDFAE7334BD2B8FF1D2C7CB5922823B03F744 |
| 61 | 29 | 1 | 0xD44B2AD5842F1EEAIA39DBC64EC064FCCFBC |
| 62 | 30 | 1 | 0x08AD296C8D17ABD021E02E20DACC247673EC |
| 63 | 31 | 1 | 0x2FE66830D806B3F8DD38DSFE1CF12DEB9774 |
| 64 | 0 | 2 | 0xC6325F42597BD48A8914944C7DB973D83E64 |
| 65 | 1 | 2 | 0xE04B98E9254434D3F765A621752C0F1FEC54 |
| 66 | 2 | 2 | 0xA74B60D84CCB156B1B8AE015B8CE980868EC |
| 67 | 3 | 2 | 0x78E7405DCFDA1DFCDA6E54B3794B49A0F8B0 |
| 68 | 4 | 2 | 0xF32F4CA1A154E746FE1C2D1E4A1251779804 |
| 69 | 5 | 2 | 0x5A2905A1CF5D06444C880ADC07EB3889E71C |
| 70 | 6 | 2 | 0x74290661C664DEB829569B7C4E6C32B2BE00 |
| 71 | 7 | 2 | 0xEBB53241F5D9CD87A612C0774ED2FED4679C |
| 72 | 8 | 2 | 0xE33B89ABA4ED020D558B833AF74072922164 |
| 73 | 9 | 2 | 0x3B7D2DEEF829E230718AA7996CD814A4DD88 |
| 74 | 10 | 2 | 0x373861E8993FC22E176F6DA6A46A10158EF4 |
| 75 | 11 | 2 | 0x2BEA329B65DE1CD26ECDD382915AC40B1D0C |
| 76 | 12 | 2 | 0x7A8B131BDSD1270C30003DA472DD81D9A434 |
| 77 | 13 | 2 | 0x9D6A237940057479D30BE19AD719F8F9B47C |
| 78 | 14 | 2 | 0xC1FB9C3811B349E9F793A14C8AE8425A6218 |
| 79 | 15 | 2 | 0xDFFDE03D8C717A346B4B1D3C02693330A9B4 |

(continued)

| Index | IDcell | Segment | Series to modulate ($W_k$) |
|-------|--------|---------|---------------------------|
| 80 | 16 | 2 | 0x76254DEF89683CD7210898069E2CDA0EE144 |
| 81 | 17 | 2 | 0x09B9B69C132C4E2DC16A1438828147D65F94 |
| 82 | 18 | 2 | 0xB1CCE0D47DF246E9059CBC974168518206AC |
| 83 | 19 | 2 | 0x1017669D7990F3AB4378924C69E442F2BAD0 |
| 84 | 20 | 2 | 0x772407B19C5FA41D542C8A2DC9ADD2C2943C |
| 85 | 21 | 2 | 0x7A38C2889EB10D93F23EC75B212D327D18A8 |
| 86 | 22 | 2 | 0xD25A195D899BF6FS31F5ECC228BE0678A438 |
| 87 | 23 | 2 | 0xA83FD1C33F4C6CAA5A0E8B062937AC310034 |
| 88 | 24 | 2 | 0xAA6DDD1A05ADF49F615BE9F9EBCA6630E440 |
| 89 | 25 | 2 | 0xB14990574937763EEBD71A12FEBOC673F878 |
| 90 | 26 | 2 | 0xDDF013D74BDDE5FBB621A32B54DE24AA1D60 |
| 91 | 27 | 2 | 0xD814295D387D2EE33F90C07CA493062B3054 |
| 92 | 28 | 2 | 0x89B93046231A786C3D74ABAEC6AFF42D037C |
| 93 | 29 | 2 | 0x5680E918BA19199E841B4D6A7D1DD1420E78 |
| 94 | 30 | 2 | 0x639CC821373B332F975817COA1AC16A48150 |
| 95 | 31 | 2 | 0x06711D78BD8978D82DA58B7E494DDF77E994 |
| 96 | 0 | 0 | 0xC882DD8DBD23C796A1389DA4EAA9A4138640 |
| 97 | 1 | 1 | 0x038086D70895496BCABC404B1EC999F67AC0 |
| 98 | 2 | 2 | 0x8203073A335DB9E57B0CA2F07D5958176B50 |
| 99 | 3 | 0 | 0x3FF1CD3638EE6469A4A482AF834EF56A2340 |
| 100 | 4 | 1 | 0x69EA7871159D5099F900C6133C07DABF56F0 |
| 101 | 5 | 2 | 0x4D88ABB17FF855393EDBC070CF0439D5E94C |
| 102 | 6 | 0 | 0x01EFD43C87362B00E376A728BC597BEED978 |
| 103 | 7 | 1 | 0x7AE20D16F3CC6F947413518FDF6E1FCCCDE8 |
| 104 | 8 | 2 | 0xBB852F9A90B0DB260BB67F45491B31DE3A74 |
| 105 | 9 | 0 | 0x088627544BDF971C1AC4F86F05A212EE9634 |
| 106 | 10 | 1 | 0x0C8A08A37C2B9D3C1812E9C116B4E6A6285C |
| 107 | 11 | 2 | 0xE74775CADDDDF0D2D808FE7FC1C177489284 |
| 108 | 12 | 0 | 0xE81ECC6AC393294E9B549A8B2BADE7FFF904 |
| 109 | 13 | 1 | 0x1C5FAE8CACE7A2CD13CAF4A34A440E909BF8 |
| 110 | 14 | 2 | 0x6EE7E42A292BDACC5C79B81CA6598274C940 |
| 111 | 15 | 0 | 0x407547BC0C961D9E9ADDE010F4990724E8DC |
| 112 | 16 | 1 | 0x46CE626ACD894F9650E6B7C3F9E3BFAE5B08 |
| 113 | 17 | 2 | 0xC59B894FBF170F44F4816750280AB8CB4E48 |

Although a few preferred embodiments of the present invention have been shown and described, it would be appreciated by those skilled in the art that changes may be made in these embodiments without departing from the principles and spirit of the invention, the scope of which is defined in the claims and their equivalents.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

**Claims**

1.  An apparatus comprising:

    an amble modulation series $PN_i^A$ for a downlink relay zone in an IEEE 802.16 network, the amble modulation series being related to a preamble modulation series $PN_i$, $i$=0,1,...,113 of the IEEE 802.16 network as follows:

    $$PN_i^A(j) = PN_i(J - j), i = 0,1,...,113, j = 0,1,...,J$$

    where J is dependent on a Fast Fourier Transform (FFT) size of the network, and is equal to 567, 283 and 142 for an FFT size of 2048, 1024 and 512, respectively.

2.  A method comprising:

    providing an amble modulation series $PN_i^A$ in an IEEE 802.16 network, the amble modulation series being related to a preamble modulation series $PN_i$, $i = 0,1,...,113$ of the IEEE 802.16 network as follows:

    $$PN_i^A(j) = PN_i(J - j), i = 0,1,...,113, j = 0,1,...,J$$

    where J is dependent on a Fast Fourier Transform (FFT) size of the network, and is equal to 567, 283 and 142 for an FFT size of 2048, 1024 and 512, respectively; and using the amble modulation series in a downlink relay zone of the network.

3.  A method as in claim 2, wherein said using comprises:

    using the amble modulation series by a base station of the network in the downlink relay zone.

4.  A method as in claim 2, wherein said using comprises:

    using the amble modulation series by a relay station of the network in the downlink relay zone.

5.  An apparatus comprising:

    means for providing an amble modulation series $PN_i^A$ in an IEEE 802.16 network, the amble modulation series being related to a preamble modulation series $PN_i$, $i = 0,1,...,113$ of the IEEE 802.16 network as follows:

    $$PN_i^A(j) = PN_i(J - j), i = 0,1,...,113, j = 0,1,...,J$$

    where J is dependent on a Fast Fourier Transform (FFT) size of the network, and is equal to 567, 283 and 142 for an FFT size of 2048, 1024 and 512, respectively; and
    means for using the amble modulation series in a downlink relay zone of the network.

6.  An apparatus comprising:

an amble modulation series for a downlink relay zone in an OFDMA network, preferably in an IEEE 802.16 network, the amble modulation series being a reverse version of a preamble modulation series of the network.

7.  A method comprising:

using an amble modulation series in a downlink relay zone in an OFDMA network, preferably in an IEEE 802.16 network, the amble modulation series being a reverse version of a preamble modulation series of the network.

8.  A method as in claim 7, wherein the amble modulation series is used bya base station in the IEEE 802.16 network.

9.  A method as in claim 7, wherein the amble modulation series is used bya relay station in the IEEE 802.16 network.

10. An apparatus comprising:

means for providing an amble modulation series which is a reverse version of a preamble modulation series of an IEEE 802.16 network; and
means for using the provided amble modulation series in the network.

11. An apparatus comprising:

an amble modulation series $PN_i^A$ for a downlink relay zone in an IEEE 802.16 network, the amble modulation series being related to a preamble modulation series $PN_i$, $i = 0,1,...,113$ of the IEEE 802.16 network as follows:

$$PN_i^A(j) = PN_i(J - j), i = 0,1,...,113, j = 0,1,...,J$$

where J is equal to 567, and a Fast Fourier Transform (FFT) size of the network is 2048.

12. An apparatus comprising:

an amble modulation series $PN_i^A$ for a downlink relay zone in an IEEE 802.16 network, the amble modulation series being related to a preamble modulation series $PN_i$, $i = 0,1,...,113$ of the IEEE 802.16 network as follows:

$$PN_i^A(j) = PN_i(J - j), i = 0,1,...,113, j = 0,1,...,J$$

where J is equal to 283, and a Fast Fourier Transform (FFT) size of the network is 1024.

13. An apparatus comprising:

an amble modulation series $PN_i^A$ for a downlink relay zone in an IEEE 802.16 network, the amble modulation series being related to a preamble modulation series $PN_i$, $i =0,1,...,113$ of the IEEE 802.16 network as follows:

$$PN_i^A(j) = PN_i(J - j), i = 0,1,...,113, j = 0,1,...,J$$

where J is equal to 142, and a Fast Fourier Transform (FFT) of the network is 512.

14. An apparatus comprising:

an amble modulation series $PN_i^A$ for a downlink relay zone in an OFDMA network, the amble modulation series being related to a preamble modulation series $PN_i$, $i = 0,1,...,113$ of the network as follows:

$$PN_i^A(j) = PN_i(J - j), i = 0, 1, ..., 113, j = 0, 1, ..., J$$

where J is dependent on a Fast Fourier Transform (FFT) size of the network.

15. An apparatus as claimed in any preceding apparatus claim, further comprising:

a base station in the IEEE 802.16 network, the base station transmitting a fame using the amble modulation series in the downlink relay zone.

16. An apparatus as claimed in any of claims 1, 5, 6, 10, 11, 12, 13, or 14, further comprising:

a relay station in the IEEE 802.16 network, the relay station transmitting/receiving a frame using the amble modulation series in the downlink relay zone.

17. an apparatus comprising, or a method comprising using:

an amble modulation series in downlink transmission of an 802.16 network, wherein the network has a Fast Fourier Transform (FFT) size of 2048 and the amble modulation series is as in the following Table 1, the network has a FFT size of 1024 and the amble modulation series is as in the following Table 2, or the network has a FFT size of 512 and the amble modulation series is as in the following Table 3:

Table 1 -Associated amble modulation series per segment and IDcell for 2048 FFT

| Index | IDcell | Segment | Series to modulate (in hexadecimal format) |
|---|---|---|---|
| 0 | 0 | 0 | 0xC121A1BB7304101BA89DF9CAE9B4226A120DEF3668F27BD063F0 3CAA21E1B91CD2CDD7303E348A8DDE8735E99AE0A23E96F06CC57 C682DC5ED0650AD72FD56D28DFF36CEFED483 |
| 1 | 1 | 0 | 0xBECAD0ADAEF6007C7D70EB0F608C6AF15B70FEE272406D9161E 02346EA951C9504C76E63559882B41CBA45B34040BCDB1F62C44564 FD24B4DC3389943B7CB296BD250BD835EF95 |
| 2 | 2 | 0 | 0x5E6489881725DDDF3CE7B5EBDFDE63121D4167C75B78E19DA7C A210550BF14B6F5494698A467B6AEEA0FB1C8BA40DEF292A7C2898 F9DA2D9E11F0F5DCE446CF27CC0EDDF8CA6A |
| 3 | 3 | 0 | 0x3C9E672D1420C9309CEF14EA6FD4F5B97A910899F3FA795C309E0 142FBFE9B4E47F51E0C7A1AB8F0660626AD49AF9005C40BFC5661C B6F6BB2E69ABOFBB9833E8E4D7B4AAFE9CD |
| 4 | 4 | 0 | 0x1636078F624760F6197F171562F3DCD54920F31205FB3A38248DA15 26F7AADD051D1066029A849FA7E94F3D62444B15962A5F328471B68 DC5C4471DE36FCA3BED6FB42D2132BD8 |
| 5 | 5 | 0 | 0x0664ABD924414FE4D2F5D0C6D1D37AE34FDBCE235402A7354F59 6BEBA26915FE5423CCEE603C62270F6390E822E149AC1292A417C9C 16CD11238A96F2DF791C90D44E6DE290072 |
| 6 | 6 | 0 | 0xD39DAF85B91E70D57739D7C4789C8C8B24CA95C9B914132E03894 918FCF6017ED37FB77DC6BB8033EF9B06E5CAC269BFD0E6EFB747 ABOFA257921 E99A1976BADB087AC96D53292 |
| 7 | 7 | 0 | 0xCEC94E54FDB6580F2BD068D3DA9E3EF57BB4FB9DD1CCE9FA053 F40937447024908E7D1CC0D37CADD0460885DD73B7D9B04454BC16 D83C4A294E6A1FD61762CA10A36B26408FA32 |
| 8 | 8 | 0 | 0x744BC357950BE1E7A2FB3DC88E80CE7E62C2826B9E354C6BBFF9 671D92ED6559EE78A5D77437073E9ECA5IBB08072E3374F57AC17A9 07A140B4D923B30625AB043064D59BE9E9E |

(continued)

| Index | IDcell | Segment | Series to modulate (in hexadecimal format) |
|---|---|---|---|
| 9 | 9 | 0 | 0x6C49998324893DC29F06017E1BB1FAB8B1005B509B7F6D2982F56 D19D4A8EA786B928458A1EFABB62BF2EE7BA04FF05E5359961BE7 D6E0E683C152793E60A755D9DABC34359D85 |
| 10 | 10 | 0 | 0x6C1B4CCFA8AACDE6EC6EB673A72C56C1C5DD345AE8C8D29FD C5253C957B7F596F0A9C66221F05218F67BAFFDD1E261EC879FF69C 6C9B9D4289631F9006C064DC6B00B895FA7660 |
| 11 | 11 | 0 | 0x3CD47864D59C9524DDE0CFFABD77EDC79A82A33C50C277A8399 9FF6410DD607EC310CE85E52665E2B2F82A2930F435DA6CCCB5E9E 837298B20A5BE3EA5EC8A545BC6EFDF97C22F |
| 12 | 12 | 0 | 0x47B6EEEAC33BB91469EDDBD6AB5BCE357E70AB23C070E3973B5 954072CE82F02B5E2947C20679DEF368A432360362D42C95B54D07CE 939749FD13E7A31106A03C121084B67D1CF |
| 13 | 13 | 0 | 0xCFB3D90E7C191FD3B4DF2A83BABC4903C1310095CE3ED22E991F E44980AEFE107D08C19A29EA806BB21E54B4B6B059E53790D3D2FC 6BBC38D418A99A252A6425C68D0E72155208 |
| 14 | 14 | 0 | 0x37C5DC6072417F46019998E9D07BB9D50BCD435BFBA9DD6CD91 A7B661E9EB480040346E36C0143C1C61697B9563552403833C4E813F8 A9B1451A600D23F8AAE3557235E0A592D0 |
| 15 | 15 | 0 | 0xB25DD8189EA22D3B7417AB4A3947442FF3DEA63BB34B8C52244E 40F06940A4987E7AF367C69082175901347C9344FEC3708CF50D31A77 FEE3BDC38DF4D67C492E5A4ECBE328326 |
| 16 | 16 | 0 | 0x0B605B518205EC8B28B6ABDFF9F70F81A3BE0277AD43D6E0D544 4CF374F9722CEC9889C26F91EFAC94CE69DABB4F1389B8BD91F4BC A5BD0CE2F087C6E7D819FCABD406715B084 |
| 17 | 17 | 0 | 0xB405BA2CDF90D4106E01B553E0ADE6D6404D8F1972E04DEBD95 A354F1A329C9EEDD6BC28197EC6C972FE297875ACEE7B9D3F8B279 70B6CE50439E692DBA4ABA939EFC71150691 |
| 18 | 18 | 0 | 0xF93910D8600937D1CE7140592B1B48EB9078ABE69D7C7E25936A2 F5C3F94EDF8C642A00A02B409FA796A00B5B55989306B67CC8AD51 0F5EE4F0B31C69B01837A53F57B313AB4B8 |
| 19 | 19 | 0 | 0xD142B09554524A773A134AAC48D2302E874A66E916587749831EBE 81C0433ED84FF3AD37461B838A2A439E742CA559D8B18BAFD8A213 CCCEF3D4A00E9F6A3FCFEC8367BC07C605 |
| 20 | 20 | 0 | 0x7FBAB81 D84E3994F2A0DF770691EA0C38E41A381C82D23DE2F1B A1905771FBBB267D419A898F3A13380DC3D366C88028850CC250D35 456D6D8E24566746495C9099A95648FE54B |
| 21 | 21 | 0 | 0x4A526A123B7CAA3C8BE39404879EB98A7ADF92F70692D066880C EC43D7D04D4465FEE3133B0E00F74A3E25F23F1CDE19255BFBF3F6 E176F49F0DBB7257E52713D6E38AC421416E |
| 22 | 22 | 0 | 0x41 BCF75850F7F507DE7BAF72440F81CCD6CBD39DF3F4C480B633 72EB304DF1EFBAFFCC46ABB23D7F576652F046E046574ABB652A34 5BE940AB1B0C41D180E5A69323AE1FC286B5 |
| 23 | 23 | 0 | 0xD1589BE6E052BF2F6454CA3B6544E7EC40EA0C52F1F1FCD9EA0A C848426C7CFD68954903E58207EA978A6FBDE339C63612B5D1129BA 47830CS48B8D852D015AA21 BA0744ED2859 |
| 24 | 24 | 0 | 0xE51B8551B163C3AEE3ED428A02B241591438C4258A827FA140318 DC6DOCFD972F700OB4E9A789CB77DBOCB887066SA525F8435EIB90 9A151BEE848909D9BA3C7AEBA1777B22967 |

(continued)

| Index | IDcell | Segment | Series to modulate (in hexadecimal format) |
|---|---|---|---|
| 25 | 25 | 0 | 0x5G557F5FB89ED6CD24E3C47C02986488E0EC7541CBA57DCB86A4 3A26407B84A29E2E5F85O8D65786871OBF5E9F78A8DIFF0454369527 F5C6360F26C9ED855A409937FBF64CE499 |
| 26 | 26 | 0 | 0xCFCBB5D7ADBC3A2E4056468E5DF76AA1CA194D4367B95F4B540 048756459D31032746FED90E16BA7F84A502745F0C701A6AF19A646B 470665C4452DF6A4FB5BDA75E881CF983C0 |
| 27 | 27 | 0 | 0x726271597B24271D3E80A6ABE9AA8E09D6128FC43E8F97AB4F6C6 032FF6958CBDC0E53B29EA89192464AF384C034883658913F51A36A9 FD3AC91C709231205C513ED702DAC05D3 |
| 28 | 28 | 0 | 0x78BC5870B4A4B7ACBC933F3CDFDBC1381 B48774E9956DF7B98B B08DE15C8AF45D45539F1CDF354B7774AD1AF63DD9C0DE444EA38 5B462CB53F42C1FB3D226926C28A107DED84C9 |
| 29 | 29 | 0 | 0x1E19E6FECF103B31B820A7444E248362790113C863DBB251CDDF5 8CFDCB580F2BECD2B335227FBOEB7815FEADB3670438F6F2F158B4 CBF2AFA56FD55A121412E3A9FE3E576FA84 |
| 30 | 30 | 0 | 0x21D6B1D51BB213B6B752A3926DCB36F5992EB2EF44BE4E2448CF E526309BD119F59611E5988CE1AA177848F5541645F3C541098F9DD4 C237E8DAF3157BE9F8C000694C3F97D5AD |
| 31 | 31 | 0 | 0xCBD095E152AF83C914490C2FFFFD0E1785046802775B7418288FBI F514CD7067B761A2A85D65A41D14CSD0E644B9BBAI298F3C4E95CC E1DDCDA5DC51D040644B1CC2897E90B6A9 |
| 32 | 0 | 1 | 0xE6B9D7C3D84283265DD2BEB35CED572A764DAAFC6E256ADB97 F5290057397D886B8128D26837919B82BB4F890F867563 C10D5998334 309A75045F6571D0BD1B205B7808299B8A4 |
| 33 | 1 | 1 | 0x8FEA67DB25D706BEE88FBAB3EFB735BA330BB88E275B5FG16812 64C9FF2A20ACB90C496043E1FADA19E528C42D1FBB5D3F596DB39 A61EE806A09411DF8D5393B5594A39DFA5C88 |
| 34 | 2 | 1 | 0x67A14BB44D27CFBD286045AF19275DF9371E1E0A82C9BF39372C3 2CB0B56D222B01981680547621BB8355FCA508D1626D00780771D61 AEE07BA98C8B3BF34367BAD63F791810F9 |
| 35 | 3 | 1 | 0x7A14B769AE708C67B88E835BFCCAF1ADAA20E97BF939CA1D176 42F7D41E0FE9469AD5CAF130218AF768918609F9B959452CC9BB504 F06055A4AFCF68BF28206452059666E2B37C |
| 36 | 4 | 1 | 0x021B17A5956BB3BFF884073626A5B61D6A40E81 C9289F5602C07A8 831F006C4BAEB3865CAIAE6C578804FB21FAB4FF7CB4965E3E1066 4B3844E138E721A3833379BDBC590BD6BC |
| 37 | 5 | 1 | 0x134B5888D3031F44C037B6A621579EEB9A6C20B70354DDA445164 F06216A91B29A266051606B8820BE0EFF99SEE1E968F49AEA7159405 34D3A0E479A2B570F9CF8B52B895B0FE4 |
| 38 | 6 | 1 | 0x14C4CF64E81ED3A4E85D013CDE78A62A9155F9E14ECC981100928 4A4F680E8A09CEA4D661E74F5EDA6934F531825A60CDE8A5F195701 A215DD60376F3FC 12D1935559E273DF686 |
| 39 | 7 | 1 | 0xC590AF461D0C9176524FE6D5D71259AFC5EM83048EFB366224374 90E053246B66419456F1891AC61BFF9557FFFE2DD633FC18383F5D0A C6F76B957601C697DEE2FA3C6128EEAC |
| 40 | 8 | 1 | 0x125BC0A5481A6BCBEF3491DAAD0FC66A93F44584836434952BE51 8F336F84F3877278A738B9F7DD9F01D22BD9AB185785949D268195D B316E1AEC1BFCDOEBD602139D1F0B927D5 |

(continued)

| Index | IDcell | Segment | Series to modulate (in hexadecimal format) |
|-------|--------|---------|---------------------------------------------|
| 41 | 9 | 1 | 0x095634A7AE024A5561359DE32DF80520A391EC83C3882CFD123266 C64016A831A57266AE03D7D8CCD1C6EE2C48936EBE157DADC7226 D09C4810E7B3DF01C21D0FB6C313F451916 |
| 42 | 10 | 1 | 0x8859ECD4F4B7441448748EAA5D72CE38E0310474082207C65AD80 B4C9BAEA6D7DA43E553DCBABDADF11737944AED9C25794AC113 AE703253F53FFA40DF7363D56B4B4B11990EE7 |
| 43 | 11 | 1 | 0xBE1CFC64DE8699B8EA06E71FC8F4CCB682943B2F49CE12F00C4B 30448747A18A42B949B8D50C9998B32E7C324E3EA7D634C6E77092D 2A5AFD77C433B00A5F0C5D42AE46133B927 |
| 44 | 12 | 1 | 0x96A807FBB5C8DF0BDA41BB190E285F6FEB64CD06569B8555CA7 CC5C5FF5BE17AA59FF0C55BB95802AE679D45630F1B4BD954867BD E482ED109A7A045451E5B67BA6370D9BD3277 |
| 45 | 13 | 1 | 0xF98AA2BF925C7C063E41B29A77A4023A78E161DECEA259181C977 95E396EE543C0651B22E1054AC1D204D0EA66366DB74D19D2038178 96700B1A3BEA7EF33F5B7B4253D0B5BEB5 |
| 46 | 14 | 1 | 0xC2F0A0D16F8EECAB5BA57E873B1D09B2437CE5DE38D04CCB4EE 98126A5727ED0A1ECA79CC22E95D8B3E3FB489934D59C0BB1A6605 3175AF2867C1C9734F5794AB45F4B05D94F1F |
| 47 | 15 | 1 | 0x56750DC1D43AA4AC8C3B7F7E3B31A682B087E28FADE45CF2CF1 8972E43688827D651C434C0FF8142D45094A77980C4A0F729C0414F84 59CBF3492F54CC8B7FB02917E793370339 |
| 48 | 16 | 1 | 0xB32AC0FB86942B7D0CE65887CF78DA2D5ADBCCFC72BA424E0A 51FC96E4BD3FB9B182C98ED07CBDF690B6731A48A56C766A2B855F 05A3EAA79619086C1E222C66ADD32E5823973F |
| 49 | 17 | 1 | 0x14E6173B5C26974F7B06229D82B3D2D9594382A65872939554858D0 4B0A13C53A0387D83721F936F82C912748A75946B6E27D66DC880665 556C33FFEF7155D0F1DFAE4566D829E |
| 50 | 18 | 1 | 0x107FBD983B3CBC9E2C4C7F4AE4EF8F50B2F658EEED9C90D79BE F725C1DFE51C4782CD2ED8AA68CB78156B62A04957218EF4B1AD19 A4D55A177423F985D4ECB74D93C8409CF8950 |
| 51 | 19 | 1 | 0x31076EE2C809D00514A761A35C71120C8563DBC12ED687BFFA1F7 30408F20E29243E87459P11FD92176274B283756060B1E5A886115699 DCEDDD4273997B175A1CA1EB33592969 |
| 52 | 20 | 1 | 0x74EB7E0A53D666C78287C3BCFACFF186785A8335D643DFB12DB8 F6854298E0FCB0BFA36A68A1A33E04FE6AC00A439906F24B31E9449 3ACAFB4057271D0C3658BF256E6645DFFCA |
| 53 | 21 | 1 | 0x69115CE97D4A82A88D8B201036E8B2A0B2FBC199CD12ACA1053B 223A2CBDDE67269F01284428DB37A5A8F502742B532F4499724438E7 2E9873F03938F43F1B7DB91C87D5984CFE |
| 54 | 22 | 1 | 0xEF1E8CE6731B59EF60099C73344E27C8F2F09A5C52587512E24DA6 9F6EB7E79969DF97F4BBA5D88A281A437AD7AF9E54082324B7407C 693C2FCE1AC581FF8993625795334AAAB1 |
| 55 | 23 | 1 | 0xB39B55F1F4C0D5312C7613395EB73CFBF9ECC61CD02FF18942BCF 3784E3E045D91587C154372CA83809F7663365442C5E37B63E0DDB73 FC1BF0829FB569A47BB31641E25F72EDB |
| 56 | 24 | 1 | 0xE2F3E274479133C076606948CB3D6A62EB304F76C810FA2A987696 87C134E2EB90D0902AC18B1693381D7B82AC498EE032A7BCCFD72 A50902F33F765353ACF5CDE50249BB5881A |

(continued)

| Index | IDcell | Segment | Series to modulate (in hexadecimal format) |
|---|---|---|---|
| 57 | 25 | 1 | 0x1DE9255ED07D57CFA62371E1979242A3DDDC435BC6E8C05B0155 3A8F6287DABFDA52DB6E081BA23ED4E04E7 A46F7CDA6244D2422E EAC60A4424A85461C8B06C9874B87067378E1 |
| 58 | 26 | 1 | 0x642CC8276CAB5C693A88FA18950B09423820277A197DD2CB47D23 6F3897BC501DA9CCD401A7C7FBEC557196781B3B3C15DAF3724B98 99058140395DB3833424C87CB91F5D9A41B |
| 59 | 27 | 1 | 0x9A270A2147AA490A66120E2DC03D2930BBE5DD1CF5D39CC4C27 3E6330A15954CF7CF193121F7FA23B6AC037E02990159668DC9C70F1 793D42BAEC2B481C5E9B971DEFCBF85C048 |
| 60 | 28 | 1 | 0x17291F60DFFABBAB43DD04CC77E11A9E9C9B1E262FA69624395A 20329F36F52D0D58CCD4DE50CSE7249BBC37CC28BD8E28E583F8A BD45233D682AFEC301A20A5F27A3B0FC51E56 |
| 61 | 29 | 1 | 0xC068E2DEC9DD2C0F34CCF5E4459405BBD7B169A792D4C8B25670 01D4263A90AF3A4D0AFA61337857DE6FF1F0174482419AD58EB079A B5277514BA7BDE050111CD5D0A0724F420C |
| 62 | 30 | 1 | 0x9767D6CDEA30ECAED5D8FF07AF807D8CA840812D1745124A622 DBD0B4BAB91818CBDD0C9579FD0801C13CA17B454A2D2956698C3 6FE99B1CBA72621114A5A15C84DDFA62CA1413 |
| 63 | 31 | 1 | 0x489D41353CE869C8A433B22D3443B7EBAC93CE1895AC3EA5337F 63ECD00E069E4AEE90A90E79588321797A8430B88888E260F8AF4C0 CE1F04FCC044088745C5D5B4C6E2937E8D4 |
| 64 | 0 | 2 | 0xA2330410704314D85FFE9CE571B0ED4927E5CCC6C689CE9A34516 D7A9C7981430E069E5A87E062484FE424EB58A45CD979031612BDD8 22D29F789368760DA9D7419B7B6BA03FC1 |
| 65 | 1 | 2 | 0x496CBE4FA2A576B7DF6965574E760FA106BAC7774387C51215DD AE6B2653BCC8293D3D6CCC14E3CE753333AA453A06CE8C9A8BDE 2730C2C416817857DF1D9DBC19D9275DF181A2 |
| 66 | 2 | 2 | 0xB0916A739E8CDE11 BAB56B22C6AB72240FCFDD3664C5F32EB00 C051E170C1FC1054B683764B0D7B664B85A8F929AFC5C66F0FF35C9 3E62D2FDCA46F9523FBBD67354A27A2EA005 |
| 67 | 3 | 2 | 0xBA69F3694DC23AFBF407AB7C3591C370ED4B99268759EF64FFB32 B00EF234C7BD6D5C3D553DEB76D6E74167D637CD8CA445366E21B CB89C10BA0B6A10407C1627A257E6C6AF4A7 |
| 68 | 4 | 2 | 0x7C3B1C1AB29DF2C6155CE650D06CCADE3E5B8FE364A69A839B4 01680ABB5B06A45C049605CF37EA1190B094AC050OC932C950F10D0 88EB7F61245B87E656FD14F058895C7463A3 |
| 69 | 5 | 2 | 0xB4944E76C2A4545AD3A783B7137C1AC2532C502C66F1A0CF01C4F 665B9D9213289FFE734C1301069A630DD5DA89E07D1C9F46D46F48B DF09B ID374CE8ABFAB0E9FDEC1956E879F |
| 70 | 6 | 2 | 0xCB416FB39A094C69EBAE4688DAFAA2F151D122798E9B1A86AD2 A386198237F0C713CAD3DA8D8522821122D02F4DE8C2D235581109D 3B91EED818D1CD6B3D4DE98A7D9124DB643A |
| 71 | 7 | 2 | 0x17B29ADD8CEF49F4AB7F4EDA37C75C8F146770ADA2001CAC57F 3678061E8545CA139E5B4E9C1EEEEDA1A4941BE44A5DD74491C9D3 58CA588FDF386E5C6A9BD7836423AB424ACF7 |
| 72 | 8 | 2 | 0xAF86BBC0376541B0DF9D45923A6B791FC1CFA03F659E575ED5623 6F4A419C80DD44E1A5013AC6E051CCD65AE7B967B0B4B9EE8F2999 1785FBFE59D3AF73155385163C98CCDDFE8 |

(continued)

| Index | IDcell | Segment | Series to modulate (in hexadecimal format) |
|-------|--------|---------|--------------------------------------------|
| 73 | 9 | 2 | 0xF174AD8DB7897C8D0C63779D120EA7BDA6DFD2C1CC85196B1C8 60CBC53ECFDC451F7BCA610D97351687BB4CF2B242A3F8B50372A D45DECEF4A5891FEOCIC66CFBOE153B85836E0 |
| 74 | 10 | 2 | 0xC88AB3A1D2502EC9C5825D4926ED5A6FB544A64AC771DDC5029 C74AC7AA7E41600D434C83FB90DOFCD1D56B5D4EFSC6394A77C24 F06FB6E7D5E9AEFD9F0F6E501730B796900165 |
| 75 | 11 | 2 | 0xFF949FA0695B1597F25D6D408C570C519CA2E345D791 C68D31 D82 E6233B67C5996F6CF7674D1C8BF9F234979D1F32D66BD298C8C6063 E61763B6A54192E0D554079CA7A12E8126 |
| 76 | 12 | 2 | 0x6C2B403A72832632653A9CABD85E32C687C7EA50775B404988A84 BF9121108CE07F8314B41D6B1F8CAC7751FB78CA4134380A049777E 7578F0B0A924349BB2F2312379D31C27C5 |
| 77 | 13 | 2 | 0x56EB0F1593B218B843F806208D9CC7EAC2B0CD24DE802BCEA24F 6D77C91707A8ESCBDA375E16A7B6EFA1872E45E28FBE381CB40D4 BF9C86F54656EA1A19DBSACBEC0602D9CC9F1 |
| 78 | 14 | 2 | 0x6F443AEFA2562FDCA7E62FC6DD089397E98D4AF0F951540E9D9F A4F7D603E34EC19A77B7F034984DF7ABF880274D125AD31C2B09171 818140D137DBDE9ECADB7B44785A460A15B |
| 79 | 15 | 2 | 0x6B09E912415EC4D976F3E4E120075FCB55B143F4D7FE6D754E5D1 9EDB6A2466BAFD3862C6CE32410C14EEEE959E608A45AA00798744 A794BC3A26B33572BBF47159C16C287B289 |
| 80 | 16 | 2 | 0x535045E6A1BE6C3871164C04917BAF3417717B7BA8CC6F108BA3C DF93D140EF636FCD70C14CEF825700852993A6F481473D6D0A6AF5E 2FCA7DA7D8C528917480D71950F3907845 |
| 81 | 17 | 2 | 0xD6C4281E746D6994EA30ED6906D65F7EB3B99FDA7ECE3EE524F3 54473C519DB0B3B5198509BA2FA64CFE2480503FEDF221E3A0E8F5B 43A92067B8BEEE889B2EB995A27594F8876 |
| 82 | 18 | 2 | 0xA10FB173C3159B2D26FEC4D9F1708E53A8AE682563C50ED3F451B 2B1CD410B64555EB54A508C254CD5FAAB657DBFEDC793812CB6A D6FB186D095314F18F1BB3DB86CAFE83F1F97 |
| 83 | 19 | 2 | 0x43E2FCE6BC77FCEC0A1797265E24B5B9F3073EC91FD21 D6F182D7 EEBB127C7A73D2F779FD4FD25107A53376C29A9E54432532BC16855 02907576AAEBB70BE8EB80848E2DC3BF88 |
| 84 | 20 | 2 | 0xDAAF7CC412910E3AC2F46BA03A2CB5C9C102CAAB280B5A9B30 CF518C8B452101D402C064FB582678EADC7FE8270DC729C86C2F7B A7A27D7D4051D20E5BED0CECC48903CAA21E17 |
| 85 | 21 | 2 | 0x51A1B3581F09E6BDA9F6F488306C682FC48FF0340632D4BF25A682 ECA503AEB4640B5A629F1F5F64E7D95917EEF0B292287F0C406306D D2331AED66675E78C8B5F4B9F4C976BB3 |
| 86 | 22 | 2 | 0xB8119205BC780C24AF954FB7D79FA19299AAD973CAA3B79498BC 84DA615AADBB13EC41D3DAAE9EA7BCCE320670E01FB662A08FD3 D86A22B82F8DC383A14155BSD3874427B40E45 |
| 87 | 23 | 2 | 0x79F1AB5149FBBCD517C5D05D9A75CE1B1E359B008FES7051F9649 7BED050DA20AF85AC72036E606C5FC13B74A1EC67C78D619EDC64 AF67E9B5A7EB19E4A4558DE1FB3BDEFE122A |
| 88 | 24 | 2 | 0x93C52847F7CEFE85A2A83CFC1D2E06E213BA213B16C6DE49157B 914E5F36904861FIA78D60FD6534E78356CDD8CFAD7DDODCC4D727 FDF7A12875823962DAA9EF9507B7E455862C |

(continued)

| Index | IDcell | Segment | Series to modulate (in hexadecimal format) |
|-------|--------|---------|---------------------------------------------|
| 89 | 25 | 2 | 0x2321F2A38ED77AA84F21A050F5D437F6828EFF9AD41C08EBAD36 CC8C6892DI2CE28EA1897C09851E896F615E87F9CIE8BED6FE4833E 3C73B91DBE8B10F627800CCD741F2FDDBB4 |
| 90 | 26 | 2 | 0xBP12B94B7CE138579A1 DA5Eo22ED498EC66F8157DD213349EE834 49D9EDE3C9E019E2B079IBDEEB5FAE72ASECAE4AF0F08521695F71 8D76EFBF303544C1ACAA266F8022A24746E |
| 91 | 27 | 2 | 0xDA5395D54C16ABA1FA3CF32AA0A56000E075AC194D8C3D40654 C83E690D13FF18CBFDE29D8C311C1BA49BF39308BD1F25ACC6C99 BD9A9C5E65021E7FCF983D78E0E9D236DDD2EF |
| 92 | 28 | 2 | 0xEE405CA07D5EC52856AD91BFB9E8ADDC0C0D21D94B4CC21F159 3C4767D0E1A1DE6159DB6402BA2BEB18FF25C3229A024D1F8E7B02 ABAD99BE9D11C9EA47534962A53CF4CFC9260 |
| 93 | 29 | 2 | 0x0517BFDADE441B914660DD5F8C50B939834848A55A94950B25DF2 0CA2E83791B441FCE4C6B2B44DA6CCBAB470842B3DA3F1566C780 66DE1850FEC90CD4BF86684588403C5C5113 |
| 94 | 30 | 2 | 0x3A12B27A39D5781CFE30EACF421535471B15A87B7F3E7FB933BB AB544EECD5BBD11801A573B26B830C64CA2F69EB0476BC0EDB925 8974CA50D8F6DCDFA7F2! A3CA949563AC7815 |
| 95 | 31 | 2 | 0xF77D8F4485053CB978A8B944D8399DA3440A9F3D0B87D5BFC82F9 7F3940429A953F429FE47CE62BE2A516B1412D4C2CE804D73CC5139 1CEF47D7125C65F566C554A7CA38330310 |
| 96 | 0 | 0 | 0xDD183EF9D8C8AE1669D517F5293EB2287786BB2AC68126A1D3E7 186EDF938054B2B0C0E34F71EA3B7A394420C1A798D6D26010A25A9 909302E12D7C0199A7B98D564CSF4F72EE9 |
| 97 | 1 | 1 | 0x705E5DF32647E7CB92E918187DD0DDF468ED96E4E5229EA2A30F DB94620AC7244939175F8D6CA13017F83CADDE33493BB0BB030AA0 B45671AA7DA90799ECB6F13CF9FEDE29BDF9D |
| 98 | 2 | 2 | 0x4C349512091531510C4985212760B795268272DFF3AAA7BA92916F3 D5A04231EDF8D443A2EBA216B2ACDDB5DC503B3000A70F339AE38 4466D2C8F683375E81E174D02837A8708F |
| 99 | 3 | 0 | 0x43CFB08B3DB7F763BD3BBAEC9AD5B6382E5D277AFA57B6134A E9F4CE12EA233D01CC1DFD73E04CC0E91E1118975F1D31586210886 DBCEE8615AFD6E5AFC10E9D1127BC697EC414 |
| 100 | 4 | 1 | 0x60E316DE1632E1B10BFE584625F13019403A4C25AB52563957D532 75B6A82259416F74452F81A655F95A4A75C3D9C740EFD04F3A31AA1 72333266ED92E369E78B49539F2BEDC40 |
| 101 | 5 | 2 | 0xb3CC58882733C9D36F9DFA47E84E7B53A33D4F312BAB66D8F0C4 04B551F8113331B4FD592423F9DB434D15D7258A0625BAB9BC69EB4 A37804D7E9052654720A3C49656967AFFED |
| 102 | 6 | 0 | 0xB07DEDF62ECA8B2DF3E62B67D38C7306B31D6586AD23B3EEFA1 9B3F910A41AA240F3470F5BB89237D494E312F87610C94FE02700877 76D8458F715FD7E242320AFF07FE9550E16 |
| 103 | 7 | 1 | 0x16466F71234B7FC9A64B1A82A8FAD35A686587DEE487F1314624A 39EBF8107002AA7E042DAE09C786668AB36F1DF6D58ED81EC22896 01E181D31D5032ADCC4AACF23CF08C66289 |
| 104 | 8 | 2 | 0xA9B7EC62E60922C11A1AA3A94E3BFE7F2DC8B590D98434FD1D78 2DC990807F9BCECCE95D0572A3AC64195528530ECF22158C967A696 01DD777F591E96D8EEAEC3B6DAC49D71FA2 |

(continued)

| Index | IDcell | Segment | Series to modulate (in hexadecimal format) |
|-------|--------|---------|--------------------------------------------|
| 105 | 9 | 0 | 0xFB225E61BEC51FF3F7391C1ED0D602BAA6680B23FC7602B65C023 7BCD13AEA392CD06BEA614E3D2AD5CBCCO1FBEDF59EOB16230D7 04489B0EF58E7A541E3AF22621118D2E9E55C |
| 106 | 10 | 1 | 0x917BF984E97504B06C18A6A36463722F0936F759B34F8C947C42179 D3298B357EE963F5565405AD2E942B709772B2FAE10D1A8B166E1DC 5FDADDD1188783BD96E5318B202D0288 |
| 107 | 11 | 2 | 0xCC785A30AE497F10EA98918197D9E6AB754AA3688E179F3D8DB F6DF1861BA81E401ADBC34CD119D75307EA941ADD6B4A367F04FB 2BD014A367C1FE1A6EEC5045CC3C7361EA7D6E |
| 108 | 12 | 0 | 0x63CA535A600FDC5D15160C215EF273EABD052519045A0631677666 D6F8389EE3D0D7D9AA8F694ABCAF9B12BFBCF7D1698D9074AB441 9D4004B66E3A9F415688D6E70A1B43E9ACC |
| 109 | 13 | 1 | 0x0243EC00FC656AEA6BCFD70CB0BC6A761610D3F4099FE1369CF8 BE663D99DCE034D54A6837ECBA2A1A1A95D1F25C63913B0B3127F B6722BDCFC0815b31EBFF9B2116DD4788D291 |
| 110 | 14 | 2 | 0xD95D3238896B05B21DBABC0503B251308C505EAF7E3CDBF89289 11B3E0B9CB91E3766C285C30E0B98F776BD065A56F9697DDDC6D05 650AFF036CD580117C224A179C90D1CA10BB |
| 111 | 15 | 0 | 0xDDD2160D107CF8FA79E0A2EDC7215683F3209EC3B3A40A7966CA 8B84E57B343A868415C086062226A45A4DAB4766F2925362397EEA96 7EDB0C879CC13657A4420A6301CF725FFE |
| 112 | 16 | 1 | 0x52A8B29EF02C788A0CBF33F90FEE131C85D4AA2CF058B1EB4C64 AD870A93C6DF7D0A63E44EDA8F7B7CDCF1EFCF6603439E8992ED9 D98459FD786DF9C54DF621BFA1B38B5310651 |
| 113 | 17 | 2 | 0x6F0C445BFC5B6037B49D6C20776018B247740079B9C3FDED22F427 19408AA9B189E77E0950518DC5DD1614CCB1CE9360B46CCD1D8F57 B93DE3F89DF3CFFA7F1DBD03256A853AEE |

Table 2 - Associated amble modulation series per segment and IDcell for 1024 FFT

| Index | IDcell | Segment | Series to modulate (in hexadecimal format) |
|-------|--------|---------|--------------------------------------------|
| 0 | 0 | 0 | 0xF57DB50BE77E3A60EE76D67CA7912007B418F8D33CAB27CC8B EE622187A14DECA294F65 |
| 1 | 1 | 0 | 0x4DCF800E623CC52D526BEF35135AC796FAB629EFE345BDD17E0 54367462FE7DD384C166 |
| 2 | 2 | 0 | 0x76319FCB87AD5AD97C07B5609356A2E03F86240A071F571BD05E 8893734EFB4D0CBAE38 |
| 3 | 3 | 0 | 0xBCB170FB690620E5CE525BFBD9D42A0B08DCF9014644338DF20 8E44A59633E53A7459FA |
| 4 | 4 | 0 | 0xF4C0C87638974E6B9A86902AD795389E7FD13D81B42C36F24461 DD21B1C8189D5051F41 |
| 5 | 5 | 0 | 0x3FAC0F59F5FF630D04293EB7716C7B0E51779234B31E2B09F7A6 A8DDA8F3321D9A7E477 |
| 6 | 6 | 0 | 0xD3D4D13A11ABF7C26DF4C80F48FC3C9F2238C9FC9BDCE72F5B 3DE89156538B1475AFB83 |
| 7 | 7 | 0 | 0x1245C65OF191AA8423A4EA0F857DAEA95FBEA3129DB165A2EF B69640607CFEF3336C53F |

(continued)

| Index | IDcell | Segment | Series to modulate (in hexadecimal format) |
|-------|--------|---------|---------------------------------------------|
| 8 | 8 | 0 | 0xA5DB1A1F774254A34BA32EA7B0B33FF8BA8F19E248B758A8D13105CE22E267B18E0D240 |
| 9 | 9 | 0 | 0x1C4FF0F128E91AA45D52D8628A49F92D32DD8B1DA1620D3590CDA57D4CC05AFC33FD72B |
| 10 | 10 | 0 | 0x7B5B62AF67A90684D18BC1F2A19497CF1CE2DE27B8BE6DD5C037BD8B649D7942FC84577 |
| 11 | 11 | 0 | 0x8E25BC255860AE02153889BD9EB43C99D709F3F75DC1D15911036FBA20CA4F95F6C0C03 |
| 12 | 12 | 0 | 0x93BE3FD5823BAAFCB4AE7F9EEF3578CC0636CD2A4E9A0E33279450DFE2947A744371678 |
| 13 | 13 | 0 | 0x772C7DC4F03B241636BA3E9E8ED149EE308FE92B810A64D20A2355AC0F2C205AE7EA5C6 |
| 14 | 14 | 0 | 0x8DF96F103B64854FAB659F8C730D44A3DB54424F82BB97B1F6BF1A38197B68148623EA3 |
| 15 | 15 | 0 | 0x4B2086A873E39C150597E16C0D7622A733DFD6CD88E324CBCCD91EE8B7E7218F56A41E9 |
| 16 | 16 | 0 | 0x3F41BE94B4AEDF3E16F53E3AB8A1599A90789F1F850DBBED730260A8CEBBEA8C4137880 |
| 17 | 17 | 0 | 0x3CE9A79F2302E45740067523584020663DA638F0EF13A1B6EC5170489DEAFED7D417B63 |
| 18 | 18 | 0 | 0x3E43B35C0FC8E3B63D737601E9CF507A942416F6E071C064086EDDA79DSF9F6B9492E32 |
| 19 | 19 | 0 | 0xB912FD155BD05114BAA6B95BF9A63D6C3189363087AC8FAC5800182CF0B2C443A1787C8 |
| 20 | 20 | 0 | 0xA224AA7DD3F3FB16D7D076ECC81DF38C41D826F11E775938949AFBE58F10F2F1B4F52BF |
| 21 | 21 | 0 | 0x6EA00D7273604A3ABF93E128C5F64092F61C0AFS0E0B17A77A4F463463055C925EE3DD7 |
| 22 | 22 | 0 | 0xED755C6EC155D54E99FA627B31BCC15C3FF46B63F4FE184953B5E1A421AE179F6C9F2C8 |
| 23 | 23 | 0 | 0x5042051DF29A85D7A7808645D4CF37E0B6C6E556FF014B6652D8BC6CCE3D0E60E5B8B3C |
| 24 | 24 | 0 | 0xAE2B94E46A91E74451341A392E9807CFBDB9638BC4ED815A1F19F3CEF6D43EC94D694189 |
| 25 | 25 | 0 | 0xFC165FBF1778BA85310C2B929F4A91ACED44A11B86DCD87586B12FA610244D1D819C4C3 |
| 26 | 26 | 0 | 0xDA0F1AB3D1F1AE7CD322DEE221424D22522C36C06E6B89EF697313A30A4DDFA5F6528AE |
| 27 | 27 | 0 | 0x4A8AE9AB1A5AB122872084B6A2CDD541F621F1BCE3E60B07933E303785FEE97637FE321 |
| 28 | 28 | 0 | 0xC48A06BA315D19759E1F226C57FD66BBDFD35E1380AF44298CF5E6070561DEE43F58212 |
| 29 | 29 | 0 | 0xBF4A84AEdE8B0FC919AF9504C84B7205B46D0CF9BFAB59689673451C89A2718CE157ACF |

(continued)

| Index | IDcell | Segment | Series to modulate (in hexadecimal format) |
|---|---|---|---|
| 30 | 30 | 0 | 0x021A957B126CD6DA7722E0010D701AFCIA1985E855E4BF9D4BE BAA3BCB38E9A3ACFA305 |
| 31 | 31 | 0 | 0xFBE0BE26A6EC687FAD70876727BEE7D133308AOA8C56735C76E 0FDB4616AD9BSCCBCB65 |
| 32 | 0 | 1 | 0x10EFB2BEDAE303304F2B4371B4BE5EEB2B518BFB46D176CFE8 94COCIA65'7040FiB9214A |
| 33 | 1 | 1 | 0x099BD0769A5DE0A03E10A6A73C17FF5D875EF6EOCC65FC7A986 05867E37B9044A85CA33 |
| 34 | 2 | 1 | 0xC67B78718F368DIC5E2D0023ADFFEAA5E55A4764EFD4DECDB4 C7F428D95334C7E519BE8 |
| 35 | 3 | 1 | 0X217FIC616A21063829BF5227EF7EF95E592AA7BD66E499A42BD D721F93A9E347E315DA5 |
| 36 | 4 | 1 | 0x5D7D60E9D3600CF86763A899BA9F1505C9279865B6C0E406C758 653AA4696A51E7EA7CC |
| 37 | 5 | 1 | 0x409F8ECF8A0232132ACF9E61756E95F902F2D8D5D70898A30EC3 949CFED9590CE786990 |
| 38 | 6 | 1 | 0x3B59394CB93E72A1C84E173D44DA313F70C85A2D905222F6D03F 3F3907E3CF75D79510A |
| 39 | 7 | 1 | 0xB021F589CA6B5C62A0DE895DF3A43EF68B8612ED3D5D3E0DA1 8A4AB527413B3D9F77355 |
| 40 | 8 | 1 | 0xA7FEB67C8431AE5ED54B09B3CD745BBE8BD6621787772DE2777 7E04D5BA485A335060C4 |
| 41 | 9 | 1 | 0xAA062F840EEE49958150CE164CE3D605797BA0305CD8A5804A04 D8F6D15BDE6684AAA53 |
| 42 | 10 | 1 | 0xBB1D46DE51223584008E4CA3CC1F231C151232829628885A158 B1FF63BE041F453FB5A0 |
| 43 | 11 | 1 | 0x9FF11B1DA431E3F4BAE2CBB4C4F0054FA3C000C1511CE84AD1 F193B48EDEBC448A93184 |
| 44 | 12 | 1 | 0x14542B2DE5628C0981E18A95A13EC1CFDD48E7B6664B1F6A8ED 1E6F784884EB24B29D9E |
| 45 | 13 | 1 | 0xC85F81AE4CA240963C58C9A7CEC6A1F01945A3F634D208A3C1A 35388027BD656F7D551A |
| 46 | 14 | 1 | 0xF9F8D3F91164BD5F5EEA2955A664F120CAB2284541B6B52DC476 73F6871CC718B58BE42 |
| 47 | 15 | 1 | 0xA42734D4260EF4BA08AAC13ABE1ACEBC028747BE586899F6D6 F0758E2445A832707FECC |
| 48 | 16 | 1 | 0xBF3DA6E16206FC62BFC5EA8207ED6B1A3818CD60A69972F9B7F 9CDB9356CAD88C553FC5 |
| 49 | 17 | 1 | 0x885CAB55BDDD9E89750DBBAE1198C9C873E66CA60B8D071286 1D92E525CAFEAF8BF212F |
| 50 | 18 | 1 | 0x4C6CC4642A1BE02FB068936CF79A1F94B52B0FAA110E71686DB 913D46A120678F3797C5 |
| 51 | 19 | 1 | 0x95BC1DC313D2B914D0DF070E480DE8341988243C50DC666B3D5 7291455FF8B6EC98A091 |

(continued)

| Index | IDcell | Segment | Series to modulate (in hexadecimal format) |
|-------|--------|---------|--------------------------------------------|
| 52 | 20 | 1 | 0xA07D52A689936B04C73051B3B9712E003FB5B9B5F110086B72D1 4E6F6FADDE186DE2190 |
| 53 | 21 | 1 | 0x3AC8751ED340FC6EAFF6408B9FBF9B92BF88F04B86B29387DEC 39A6C8C698BC5075A14C |
| 54 | 22 | 1 | 0x7C5BA9A36893DB8563D16338FC45B095BD63A1EDCCC68EFBF7 FA2DF5AA2BOB2CFCB9600 |
| 55 | 23 | 1 | 0xF1BB4E916F70576E60DA403E360868FD4610384206F23E33585AC 3E781C9C53D15EE955 |
| 56 | 24 | 1 | 0x98BA49B9EF848DC0F5AC69A16D6967CAA0947DB98C001030920 76A7D5290E923A2E08CF |
| 57 | 25 | 1 | 0xAFC405C2D91C7E2F6396EF5B8B04AA5127C86B0F6E5C14C23EF 6FE3BFBE39DOACBFB269 |
| 58 | 26 | 1 | 0x0860019913383C35595C0746867F4434BF0A5A6271BF5D42936AD C33AA2514B11DE6EB6 |
| 59 | 27 | 1 | 0x2AE39A73970FD2CFF7ED59006335416D681C743ED2EDA81F4128 37609199BC5363892A3 |
| 60 | 28 | 1 | 0x013EEBB7D1091D37815A85A3BFE676F3E85D3F6F3975D6441B5 A705C9B9870CB4C771B6 |
| 61 | 29 | 1 | 0xBF02968EDF90ADC62BDCB887387B27B3890F4D5676BC4E2FF67 1829245E32EEFBFD1F19 |
| 62 | 30 | 1 | 0x84B3900D7D3EAF6E46B2CF9AE8650E479333962F95E95F9EF8343 BE3D845FF1B5D00CA6 |
| 63 | 31 | 1 | 0x06C7985575C7686968633D4F8E423F3C9D236BB617B0FF8979C20 4EDF23BE5AB6DD6CF6 |
| 64 | 0 | 2 | 0x6ABCB0B37CE1A318129EE59BF1DE143B7FC6CD6EC5E20B9972 BB56CO345515OE300DE4B |
| 65 | 1 | 2 | 0x2BACF5C40ED7E3461C7438552E43181F3C8E592457D497B6E9B4 AE034D8CB1B773BBFE7 |
| 66 | 2 | 2 | 0xACC0EC8C3A8DC8CC11424F46330621C1DA6AC35E9D357EE212 CEFB92A0CB4402A92FDE1 |
| 67 | 3 | 2 | 0x62E292288C34DA44ABB4EC6D42E5000D3BBD0F906427AF759F3 276E3C8F27B7D0C1BB41 |
| 68 | 4 | 2 | 0xA29F1D5F6DF92FDD2DB669E9BD21CAEE684A159EF1B9E802FE B1C9896AF8762F3276072 |
| 69 | 5 | 2 | 0x6E3B15CEE3C2B7F5262EBB7EE3B53440D6856BB40120390B09C DBF0E67A596A2CA26826 |
| 70 | 6 | 2 | 0x898AC72500F925C02841A5D699C39393B3EA0C1F802129A956528 FE06DB95581596E1DF |
| 71 | 7 | 2 | 0x70E0018C8AED264C6BFB5BA82F13674134FB95F1837C38AA1E6 FC6339EF2D02F6B08EEE |
| 72 | 8 | 2 | 0xCFDC022326523C0C8AFCAA749DC32F47AF2675B074A75A7ACE 7ABFD1C43C9FDD698FC0A |
| 73 | 9 | 2 | 0x34E9743863160970282902E55D45C0D7FA2099E66CA7BB9A5AB9 DA931E666A291652BFA |

(continued)

| Index | IDcell | Segment | Series to modulate (in hexadecimal format) |
|-------|--------|---------|-------------------------------------------|
| 74 | 10 | 2 | 0xAB05BC5503E7FF47828EE648DB849BE9A32D5D5678DA673F12B C6B57BAD13023B21ADA9 |
| 75 | 11 | 2 | 0xBBF9AED7FA7650SE27C6858A56B479F831A9C5F8B8F5E51CE7D 051DB2C91336D5C6EA19 |
| 76 | 12 | 2 | 0xB17EA958C03B6EDEA9B011DCE838756D90C51FDB62E6386BCA CBD619B5C29BOOFA2B1BF |
| 77 | 13 | 2 | 0xF9C5192E52732F6025A7E064395F91C0445F24CF7A11E8214C9680 458DF76F2CAC4C275 |
| 78 | 14 | 2 | 0x2C7901BD86AB137D27F57D3984D07A76DE2B996F559F47143129 9D32187DC919EAA04A7 |
| 79 | 15 | 2 | 0x53BDFC1CC1BA48D75066CEC7FCA7C109C54484C783B0E0C8173 A96AB6CBIE28296B88D5 |
| 80 | 16 | 2 | 0xB570272C736EF260A9A50A6CBEC77A12FD2364F4B36FADF3A8F 9FF60488F8F623905118 |
| 81 | 17 | 2 | 0xB47BD0817141FD280E0B4A9C36F161758DF2FAA8F31C32AFE7F A23B736A59CAA47B38D2 |
| 82 | 18 | 2 | 0x3D9BB5016D23924068525DE6ACEDDB321727C5F56AB91C35788 6C7A6179E15631F15368 |
| 83 | 19 | 2 | 0x1AB1EC934DD376A781B495CCBFB55800ED1C19B1F4EB582DE4 06E281E174705510D4B9C |
| 84 | 20 | 2 | 0xF28BA38C44B2F7CEBC3BA741F620B13A3607C625979FB78A8A5 ACCFA48B52B013D1A431 |
| 85 | 21 | 2 | 0x9C9B322697713B5FB83CB323B14359CA440435C5E0FB712CA39E 8A1AA4136AC63940582 |
| 86 | 22 | 2 | 0x44ED5C4AE1DD7952DD73799FCB5DD4606F01ACB3A3E89FDF23 7DFDC8920197D3EE50EB0 |
| 87 | 23 | 2 | 0xAED321C43F2A8D9CF2CB69227DC8CF98A94DC29D3D0722B737 8F2D227BF9F8090C50056 |
| 88 | 24 | 2 | 0x76E6F62939F70CE294B95531E88174F20BFD3EE67F0587F4948324 3FD567D15E088ACA9 |
| 89 | 25 | 2 | 0xEDF18994DD4D35B5E7B96ECDC7745D86BEE4326EA8548203EF4 D63CD078D9BF0E284F80 |
| 90 | 26 | 2 | 0x9CF78DD61DB73E67C6BB08067FD6A70501D96269A533EAEFB2 BC5F02296CAA87FD51EA5 |
| 91 | 27 | 2 | 0xA56652AF76S93BDBB1D602D7A02603332E32EA9AA362495168B A7BEEE6C18C0D5FF3878 |
| 92 | 28 | 2 | 0xE7A04246C139FE36CB52BF629F5A9D1E9D90A6737174492F520B 39FACE59853439282AC |
| 93 | 29 | 2 | 0x41820D977E5A1D8F37DF2DA4C1CDC714E8A35E69514F998C05E 9182BOBE2A57B067E45A |
| 94 | 30 | 2 | 0xF45CB6737A83AA1D8CA788CBC85991136FEA29B9BE4BDEB506 08A1DC7F081D68DC5B21E |
| 95 | 31 | 2 | 0x95F5187D25AD22ED14DEC296B9EADC606C81CC4A912B81E377 CBC8315CC6E9EA63DFBEB |

(continued)

| Index | IDcell | Segment | Series to modulate (in hexadecimal format) |
|-------|--------|---------|---------------------------------------------|
| 96 | 0 | 0 | 0xF3E1DC03AF64DD7F3672AEBEC1B6295FCEC5A1C9945B5207A4 66414AFFF959CBD64F586 |
| 97 | 1 | 1 | 0xBE18E3D2C24CF06B72683BA4CE070AEF229017AD4EB02F6285F 53A6557DBC9DB3E9BEEB |
| 98 | 2 | 2 | 0xDBB35C45292D66FBOD62BEA28FF12503F5B27FC07E1D5F3183B D9C38392F5A6539B94A2 |
| 99 | 3 | 0 | 0xC6457FBB3B1E32FA313D8917250C09217C7DA77F50AB0CE385D 7886B83EA55B864035CC |
| 100 | 4 | 1 | 0x932EF9D473225A9F6921F17A451F051FB78EDEF6A5B989B994B3 DC0F21540F20E312B7D |
| 101 | 5 | 2 | 0x7B9E74C5EE4A27A3B488CB5087CA8AB4DED21E44660EC528060 A9432D2FD740907D3370 |
| 102 | 6 | 0 | 0x6C5A3D66BEA2103E9C46F4A6539CDA8ABAF2BCBC99F607AC4 ECB4559BFBE3911EC92D3E |
| 103 | 7 | 1 | 0x88B7F6AC76BB9EE6FE8F3F0F122699547AE334742BD38700FDB7 CD691C2363536FC4FC2 |
| 104 | 8 | 2 | 0x5C7C77ED3522C680859D472A72D01EC690DEE9F9A9B0D87F3DC 0F7D16A523DF9045134E |
| 105 | 9 | 0 | 0xC2FB6923D745E871A0C669D1011A51BD50AF591A9DADB3FFDF 295921E4EC3BOA79D75EE |
| 106 | 10 | 1 | 0x734BEDF2FBE961C5AD6E584EDE3FF1E2B416881636E97AC63A8 F755527FEF-0913C48E66 |
| 107 | 11 | 2 | 0xD9D63B97EBF821DD0149B22D0149ED8CDBC606159D5151749CC0 B56E7D0DAA7D93A36BD3 |
| 108 | 12 | 0 | 0xC132576511970E9C4530BAA95B8E53E13A2296FF8B5B2DC60A6 B1BE661393CD1F7BEBE3 |
| 109 | 13 | 1 | 0x7190B71B1CAA6F2FEDCFAF097405798BDCB5447393204E8C437 D4D306A79F49BD5624DF |
| 110 | 14 | 2 | 0x130F05108B75D27A5EF0AD1053E5C90CA81BB9199263CCFD4D00 E43FF1BBF4E29EA2E794 |
| 111 | 15 | 0 | 0x13C5310837C749B9AC20C11DC0B71DABFD19DB401A9797C3C0 C7DD2D7EB336B1B94FE45 |
| 112 | 16 | 1 | 0x6E31118A654962412D16BB6283444BE8390F11AF280ABA3D67D4 DC7FE4C005F6470E7FC |
| 113 | 17 | 2 | 0x9AD96CD25DCBA2C9976AA272B4E3757D475F8168ED7DF7F397 E34FF38011A37E0C89782 |

Table 3 - Associated amble modulation series per segment and IDcell for 512 FFT

| Index | IDcell | Segment | Series to modulate (in hexadecimal format) |
|-------|--------|---------|---------------------------------------------|
| 0 | 0 | 0 | 0x4FADFFE80EEC2353D5E0D719E27165A726CC |
| 1 | 1 | 0 | 0x689540E03A9813D746D411D6F5A34B618636 |
| 2 | 2 | 0 | 0x7EAB49F0D40012E30F6889469B8E4CC8DAE2 |

(continued)

| Index | IDcell | Segment | Series to modulate (in hexadecimal format) |
|---|---|---|---|
| 3 | 3 | 0 | 0x20E1BD2D774AA4FCC71967D487C2132899B8 |
| 4 | 4 | 0 | 0x3B75A75918A6046E6CEF1C045B7461A0FC06 |
| 5 | 5 | 0 | 0x70EF1EF0E5EBC1135B7D5C6A2B3296621B22 |
| 6 | 6 | 0 | 0x631CB45B105A839120141FAABE6E062E9DB0 |
| 7 | 7 | 0 | 0x3D140B4B808275866786FD39819CB56F99B4 |
| 8 | 8 | 0 | 0x4D3EAC3F93F3183890313FA5490C479D116A |
| 9 | 9 | 0 | 0x71C9D4DA13243705C67A34272CBBB4008F14 |
| 10 | 10 | 0 | 0x58A42AD7B2A9B35C7A61C9ED377C0DBS0B08 |
| 11 | 11 | 0 | 0x7C7805023CA85B2536A49744D6BC646E3144 |
| 12 | 12 | 0 | 0x570826242964A3D970197519D8BS3461DA3E |
| 13 | 13 | 0 | 0x49AD9B551D5D6328C67468383F40083485FE |
| 14 | 14 | 0 | 0x1D40D60A5254D9453EA19B9BA7C1005EF334 |
| 15 | 15 | 0 | 0x39C144E4DA882F6897AA3442361FC2FAD6C6 |
| 16 | 16 | 0 | 0x753A6EC9E4F3650158A11AD89F282D23840E |
| 17 | 17 | 0 | 0x292FA6D9EEB9380C51C64207E10CA9C5C588 |
| 18 | 18 | 0 | 0x1DCC7A97488252B60C39A076D147602365F4 |
| 19 | 19 | 0 | 0x21FF46D567A04D2F235361EBF18D32AEFEF2 |
| 20 | 20 | 0 | 0x07A545581C96FBC44CA579B589B83EE93CFE |
| 21 | 21 | 0 | 0x1D702FE4A54DB0D04CB5544709062C3B1B9A |
| 22 | 22 | 0 | 0x1138EB1890A2F937C44976A1143C045687DA |
| 23 | 23 | 0 | 0x64B6A4BCB858AA2000BEE1670671DE372AD0 |
| 24 | 24 | 0 | 0x4BD9245280AA3DCCBDE04FCECD0D2F7F239C |
| 25 | 25 | 0 | 0x3B5BE1F4D4217A63774C59A33DC120A3340A |
| 26 | 26 | 0 | 0x1BE2B98347E2034F48A552742029079B5CE0 |
| 27 | 27 | 0 | 0x028D1838CF58DE02EFA96565B4C88D8B67BA |
| 28 | 28 | 0 | 0x5F68B1B2A7B73CC1F2ACEBF5B0AC1BC400CC |
| 29 | 29 | 0 | 0x665C532EAE0EFDEFCD6802FC3A7310EA5348 |
| 30 | 30 | 0 | 0x107D32AC3D373195BA843EBE6968C4BF9BE2 |
| 31 | 31 | 0 | 0x3FEAB859E5262F941B654C60720DB330F334 |
| 32 | 0 | 1 | 0x1EED6EE8F4A3C06B60DFSB116089237C300E |
| 33 | 1 | 1 | 0x19822C4632EC86450C6FE10A51E5C0FD5F2C |
| 34 | 2 | 1 | 0x2DDE838B1D072B0CFBB04AA294991CC04696 |
| 35 | 3 | 1 | 0x1C357F566732B055A01C0139653483A7C81A |
| 36 | 4 | 1 | 0x03B5252046ED369F0B98CC6F9DF0C74D5B2E |
| 37 | 5 | 1 | 0x32D21CF781A89AB9891534683411128FD7AE |
| 38 | 6 | 1 | 0x30E0EBF1A21A99E492755A1A85B0B712A660 |
| 39 | 7 | 1 | 0x63855C3358BA6EC7E5C7C8ED5B43BFF9084A |
| 40 | 8 | 1 | 0x662AB8C7A8E37FA564F4FE6C2D23493FD8B0 |

(continued)

| Index | IDcell | Segment | Series to modulate (in hexadecimal format) |
|---|---|---|---|
| 41 | 9 | 1 | 0x5E9F2165C7ED09BE6B35FA315DE9BC719518 |
| 42 | 10 | 1 | 0x458D1A911535B85F1B0E5DBA01F6910C80E6 |
| 43 | 11 | 1 | 0x491E3B003C66376EB823538EA540F6525814 |
| 44 | 12 | 1 | 0x79B4D5E3A846DB6BF3BE70EE0B2A748FC442 |
| 45 | 13 | 1 | 0x7E6B673849A5284811CEDBE051E2B7447D5C |
| 46 | 14 | 1 | 0x5F6022FB7C7C75B2F44F414E715A98B34A9E |
| 47 | 15 | 1 | 0x69A2AC9A97DC0F394ACC4F127B3C521FBF62 |
| 48 | 16 | 1 | 0x0D4EE6A642CCD0924F0BFE83B6DD7C3BEC70 |
| 49 | 17 | 1 | 0x0EA5F06FE05E70ACE66571F7FD90435E698A |
| 50 | 18 | 1 | 0x2020682A263C1DDC29E2C4BED90946B9646E |
| 51 | 19 | 1 | 0x0547A6A4F4DD8D0A5025DC6D726209BAA618 |
| 52 | 20 | 1 | 0x50B482EDE4B8A9D9D75163EDED1CC62458A6 |
| 53 | 21 | 1 | 0x2422623BCF0619F22DA083E114A5EC9517AA |
| 54 | 22 | 1 | 0x0F35DE05FB486550A17D7FC4E468EA8E4E52 |
| 55 | 23 | 1 | 0x429894A78B0FA1CC14C8D0FB436CD57FFB84 |
| 56 | 24 | 1 | 0x0F80B04278E8484316B16B6F4E8B5C444DD6 |
| 57 | 25 | 1 | 0x4F0018149EE6A47C4C35851716D04B8774CA |
| 58 | 26 | 1 | 0x20E2DB0462772C48347CA565714C2BC413F0 |
| 59 | 27 | 1 | 0x634CEF7A72CC1DEFA56D9F8C95D36806AE0E |
| 60 | 28 | 1 | 0x45DF81B8828935A7C6971FE3A97A599CEBF6 |
| 61 | 29 | 1 | 0x7BE67E4C06E4C7B738B0AEF1E84356A9A456 |
| 62 | 30 | 1 | 0x6F9CDC4866B608E80F0817ABD1626D296A20 |
| 63 | 31 | 1 | 0x5DD3AF691E70FF5639763F9AC036182CCFE8 |
| 64 | 0 | 2 | 0x4CF8379D3B7C64525122A257BD3485F498C6 |
| 65 | 1 | 2 | 0x546FF1E0695DO8CB4DDF965845492E33A40E |
| 66 | 2 | 2 | 0x6E2C2032E63B500EA3BIAD51A664360DA5CA |
| 67 | 3 | 2 | 0x1A3E0B25A53D9A54ECB67F70B7E77405CE3C |
| 68 | 4 | 2 | 0x4033DD1490A4F16870FEC5CE550B0A65E99E |
| 69 | 5 | 2 | 0x71CF2239AFC076A0226444C175E70B4128B4 |
| 70 | 6 | 2 | 0x00FA9A986CE47DB2D5283AF64CC70CC1285C |
| 71 | 7 | 2 | 0x73CC56FE96E5DC0690CBC367375F04995BAE |
| 72 | 8 | 2 | 0x4D08929C05DEB983A35560816E4BAB23B98E |
| 73 | 9 | 2 | 0x23764A50366D33CAA31C188F283EEF697DB8 |
| 74 | 10 | 2 | 0x5EE35010AC4ACB6DEDD0E887F9322F0C39D8 |
| 75 | 11 | 2 | 0x6171A046B512839766EC9670F74DB298AFA8 |
| 76 | 12 | 2 | 0x584B3703769C4B78001861C91757B191A2BC |
| 77 | 13 | 2 | 0x7C5B3E3F31D6B30FA1973C5D40053D88AD72 |
| 78 | 14 | 2 | 0x308CB4842EA2650B93DF2F259B103873BF06 |

(continued)

| Index | IDcell | Segment | Series to modulate (in hexadecimal format) |
|-------|--------|---------|-------------------------------------------|
| 79 | 15 | 2 | 0x5B2A19992C807971A5AC58BD1C63780F7FF6 |
| 80 | 16 | 2 | 0x450EE0B668F2C0322109D6782D23EF6548DC |
| 81 | 17 | 2 | 0x53F4D7C502823850AD0768E4699072DB3B20 |
| 82 | 18 | 2 | 0x6AC083142D01D27A73412EC49F7C560E671A |
| 83 | 19 | 2 | 0x16BA9E844F2C64923D85AB9E133D72CDD010 |
| 84 | 20 | 2 | 0x78528697682768A26855704BF4731BC049DC |
| 85 | 21 | 2 | 0x2A317C996909B5C6F89F93611AP2228638BC |
| 86 | 22 | 2 | 0x384A3CC0FA28866F5F195EDFB3237530B496 |
| 87 | 23 | 2 | 0x5801186BD928C1A2E0B4AA6C65F98717F82A |
| 88 | 24 | 2 | 0x044E18CCA7AF3F2FB50DF25F6B40B1776CAA |
| 89 | 25 | 2 | 0x3C3F9CC61AFE90B1D7AEF8DDD925D413251A |
| 90 | 26 | 2 | 0x0D70AA48F655A98B08DBBF4F77A5D7901F76 |
| 91 | 27 | 2 | 0x5419A8C1924A7C0613F98EE97C3975285036 |
| 92 | 28 | 2 | 0x7D81685FEAC6EBAA5D786C3CB188C4193B22 |
| 93 | 29 | 2 | 0x3CE08517717CAD65B042F33130BA312E02D4 |
| 94 | 30 | 2 | 0x15024AD06B0A07D035D3E999B9D90826738C |
| 95 | 31 | 2 | 0x532FDDF76524FDA34B68363D237A3D711CCO |
| 96 | 0 | 0 | 0x04C3904B2AAE4B72390AD3C7897B63768226 |
| 97 | 1 | 1 | 0x06BCDF3326F1A4047AA7AD255221D6C20380 |
| 98 | 2 | 2 | 0x15ADD035357C1E8A61BD4F3B7598B9C18082 |
| 99 | 3 | 0 | 0x0588AD5EE583EA824A4B2C4CEE38D9671FF8 |
| 100 | 4 | 1 | 0x1ED5FAB7C07990C6013F321573511C3CAF2C |
| 101 | 5 | 2 | 0x652F573841E61C07B6F939543FFD1BAA2364 |
| 102 | 6 | 0 | 0x3D36EFBD347A29CADD8E01A8D9C27857EF00 |
| 103 | 7 | 1 | 0x2F6667F0EDF7E315905C53EC679ED1608EBC |
| 104 | 8 | 2 | 0x5CB8F719B12545FCDBA0C8F61A12B3E943BA |
| 105 | 9 | 0 | 0x58D2EE908B41EC3E46B071D3F7A455C8C220 |
| 106 | 10 | 1 | 0x7428CACE5AD1072E90307973A87D8A20A260 |
| 107 | 11 | 2 | 0x429225DD0707FCFE2036961F7776A75DC5CE |
| 108 | 12 | 0 | 0x413FFFCF6BA9A2B255B2E5299386AC66F02E |
| 109 | 13 | 1 | 0x3FB212E044A58A5EA791668BCE6A62EBF470 |
| 110 | 14 | 2 | 0x05265C8334CA703B3C7466B7A928A84FCEEC |
| 111 | 15 | 0 | 0x762E49C1325E100F76B2F370D2607BC55C04 |
| 112 | 16 | 1 | 0x21B4EBFB8F3F87DACE14D3E52366ACSCE6C4 |
| 113 | 17 | 2 | 0x24E5A63AA02815CD025E45E1D1FBE523B346 |

## FIG. 1
PRIOR ART

FIG. 2
PRIOR ART

PROVIDING AN AMBLE MODULATION SERIES $PN_i^A$ IN AN IEEE 802.16 NETWORK, THE AMBLE MODULATION SERIES BEING RELATED TO A PREAMBLE MODULATION SERIES $PN_i$, $i = 0,1,...,113$ OF THE IEEE 802.16 NETWORK AS FOLLOWS:

$$PN_i^A(j) = PN_i(J\text{-}j), \; i = 0,1,...,113, \; j = 0,1,...,J$$

WHERE J IS DEPENDENT ON A FAST FOURIER TRANSFORM (FFT) SIZE OF THE NETWORK, AND IS EQUAL TO 567, 283 AND 142 FOR AN FFT SIZE OF 2048, 1024 AND 512, RESPECTIVELY

USING THE AMBLE MODULATION SERIES IN A DOWNLINK RELAY ZONE OF THE NETWORK

FIG. 3

FIG. 4

FIG. 5

50
52
54

MR-BS

CODE
PROVIDER

56

RS

AMBLE
DECODER

57

SS

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 601892704 B